# EUROPEAN PATENT APPLICATION

(11) **EP 2 978 278 A1**
(43) Date of publication of application: **27.01.2016**
(21) Application number: 14769349.3
(22) Date of filing: 05.03.2014
(51) Int. Cl.: H04W 92/18, H04W 76/02, H04W 84/10, H04W 88/06

(54) **TERMINAL DEVICE, BASE STATION DEVICE AND CONTROL DEVICE**

(30) Priority: 22.03.2013 JP 2013059896
(71) Applicant: Sharp Kabushiki Kaisha, Osaka-shi, Osaka 545-8522 (JP)
(72) Inventor: ENOMOTO Masayuki, Osaka-shi, Osaka 545-8522 (JP); ARAMOTO Masafumi, Osaka-shi, Osaka 545-8522 (JP)
(74) Representative: Müller Hoffmann & Partner
(86) International application number: PCT/JP2014/055618
(87) International publication number: WO 2014/148257

(57) **Abstract**

In a proximity service, when positional information is notifies to a server in advance and the proximity service is started, UE that transmits and receives data receives the proximity degree including a communication target UE from the server before proximity discovery is performed to discover the communication target UE, and the UE controls unnecessary proximity discovery by discovering the communication target UE based on the proximity degree.

## Description

### Technical Field

The present invention relates to a mobile communication system that includes a terminal device, a base station device, a control device, a proximity terminal positioned in the proximity of the terminal device, and a server device which detects the proximity terminal.

This application is based upon and claims the benefit of priority of the prior Japanese Patent Application No. 2013-059896, filed on March 22, 2013, the entire contents of which are incorporated herein by reference.

### Background Art

In the 3GPP (the 3rd Generation Partnership Project) which is the standardization group for a mobile communication system, the specification work of EPS (Evolved Packet System) described in Non Patent Literature 1 as the next generation mobile communication system has proceeded, a wireless LAN (WLAN) as well as LTE (Long Term Evolution) as an access system connected to the EPS has been examined.

In the 3GPP, as described in Non Patent Literature 2, proximity services (ProSe) that notify user equipment (UE) of the presence of other user equipment in proximity have been examined. In the ProSe, the UE can directly transmit and receive data to and from the proximity UE without a base station.

In the ProSe, since the data is directly transmitted and received between the UEs, a mobile communication network or a wireless LAN network is not used, and data traffic can be offloaded. Thus, it is possible to avoid the concentration of traffic in the LTE.

In the ProSe, the use of two methods as a direct communication path between the UEs has been examined. The first method is a method (hereinafter, referred to as LTE Direct) of establishing the direct communication path between the UEs using an LTE access technology, and the second method is a method of establishing the direct communication path using a wireless LAN access technology.

In the LTE Direct, the UE uses a commercial frequency allocated in an LTE system of each mobile communication provider, and directly transmits and receives data to and from the another UE by using an LTE communication system.

In the WLAN Direct, the UE uses a non-commercial frequency allocated in the WLAN, and directly transmits and receives data to and from the another UE.

In the ProSe, the necessity for the UE to detect the presence of the communication target UE in proximity by discovering a communication target UE in order to transmit and receive data through the LTE Direct or the WLAN Direct is given as a service required condition.

In order to provide a service by the mobile communication provider, direct communication between the UEs is defined as being required for an approval of the mobile communication provider at the time of establishing the direct communication path between the UEs.

As stated above, an object of the ProSe is to provide a service that notifies a certain UE of the presence of the proximity UE, and a service that provides communication through the direct communication path between the UEs.

Meanwhile, in the related art, the mobile communication provider provides a service that performs communication via a base station device in the communication between the UEs. Since the service that provides the communication through the direct communication between the UEs can be used only when the distance between the UEs is in proximity, it is necessary to provide the service that provides the communication through the direct communication path while maintaining the service that performs the communication via the base station device of the related art irrespective of the distance between the UEs.

### Citation List

### Non Patent Literature

NPL 1: 3GPP TS23.401 Technical Specification Group Services and System Aspects, General Packet Radio Service (GPRS) enhancements for Evolved Universal Terrestrial Radio Access Network (E-UTRAN) access

NPL 2: 3GPP TR22.803 Technical Specification Group Services and System Aspects, Feasibility study for Proximity Services (ProSe)

### Summary of Invention

### Technical Problem

However, since there is no means for realizing a notification method of the proximity terminal and an establishment method of the direct communication path between terminal devices, the terminal device starts the discovery at random when a terminal device as a communication source discovers a proximity terminal as a communication target irrespective of whether or not the proximity terminal is in proximity. When as the terminal device as the communication target is not in proximity, the proximity terminal is not discovered, and the terminal device wastes power consumption.

When the terminal device starts the transmission and reception of data through the ProSe, even when the terminal device as the communication target is in the proximity of the terminal device, if the terminal device requests the LTE Direct and is not able to perform the LTE Direct with the terminal device as the communication target, unnecessary discovery is started, and thus, the terminal device as the communication source wastes power consumption.

When the terminal device starts the transmission and reception of data through the ProSe, even though the terminal device as the communication target is in the proximity of the communication source UE, if the terminal device as the communication source requests the transmission and reception of data through the WLAN Direct and the terminal device as the communication target is not able to perform the transmission and reception of data through the WLAN Direct, the unnecessary discovery is started, and thus, the terminal device as the communication source wastes power consumption.

Since the mobile communication provider has no means for granting permission or non-permission for the establishment of the direct communication path of the terminal device, the mobile communication provider is not able to provide a proximity communication service to a user.

The mobile communication provider is not able to perform the transmission and reception of data through the direct communication path while maintaining the communication via the base station device provided in the related art. When the direct communication path and the communication path via the base station device of the related art can be used, it is not apparent whether or not to use the direct communication path or the communication path via the base station device.

An aspect of the present invention has been made in view of the above circumstances, and it is an object of the present invention to provide a mobile communication system in which a terminal device as a communication source efficiently discovers a proximity terminal and performs notification and a mobile communication provider provides direct communication between the terminal devices or communication via a base station device of the related art to the terminal devices when data is transmitted and received in ProSe.

### Solution to Problem

There is provided a terminal device of a mobile communication system that includes a server device which detects a proximity terminal, a control device, a terminal device, and a proximity terminal device which is positioned in the proximity of the terminal device. The terminal device is adapted to: obtain information regarding a proximity terminal device positioned at a distance capable of performing the establishment of a direct communication path correlated with an application, and information regarding a direct communication path capable of being established, from the server device; transmit a request message which requests an approval for the establishment of a communication path via a macro and the direct communication path capable of being established to the control device; receive a response message indicating that the establishment of the communication path via a macro and the direct communication path capable of being established is permitted; and establish the direct communication path with the proximity terminal device based on the response message, or establish the communication path via a macro with the terminal device.

The terminal device may be adapted to: retain a first APN which permits the establishment of the direct communication path and the communication path via a macro, and a second APN which does not permit the establishment of the direct communication path; and transmit the request message which requests the approval for the establishment of the direct communication path capable of being established to the control device by including an APN which permits the establishment of the direct communication path and the communication path via a macro.

There is provided a terminal device that is adapted to: transmit a request message which requests the establishment of a communication path by including an APN which does not permit the establishment of a direct communication path and a communication path via a macro to a control station; receive a response message indicating that the establishment of the communication path is permitted and the permitted communication path is established, from a control device; establish the communication path based on the response message; manage an application and a communication path in correlation with each other; and select the direct communication path or the communication path to transmit application data using the selected communication path based on the correlation of the application with the communication path.

There is provided a control device of a mobile communication system that includes a server device which detects a proximity terminal, the control device, a terminal device, and a proximity terminal device which is positioned in the proximity of the terminal device. The control device is adapted to: manage identification information of the terminal device and permission information indicating that the establishment of a direct communication path and a communication path via a macro is permitted in correlation with each other; receive a request message which requests an approval for the establishment of the direct communication path and the communication path via a macro transmitted from the terminal device; and permit the establishment of the direct communication path and the communication path via a macro of the terminal device based on the correlation of the identification information of the terminal device with the permission information for the establishment of the direct communication path and the communication path via a macro.

There is provided a base station device of a mobile communication system that includes a server device which detects a proximity terminal, a control device, a terminal device, and the base station device. The base station device is adapted to: receive a notification including information indicating whether or not the establishment of a direct communication path of the terminal device and a communication path via a macro is permitted, from the control device; and allocate a radio resource for transmitting and receiving data to and from the terminal device based on the permission information included in the notification.

### Advantageous Effects of Invention

According to the aspect of the present invention, when the terminal device performs the transmission and reception of data in the ProSe, it is possible to prevent the power consumption of the terminal device from being inefficiently consumed by discovering the proximity terminal without unnecessarily discovering the proximity terminal.

It is possible to discover the proximity terminal by giving the condition for discovering the proximity terminal to the terminal device, and it is possible to realize the start of the transmission and reception of data in the ProSe.

The mobile communication provider determines whether or not to permit the establishment of the direct communication path of the terminal devices, and thus, it is possible to provide the direct communication between the terminal devices to the terminal devices.

The mobile communication provider can perform the transmission and reception of data through the direct communication path while maintaining the communication via the base station device provided in the relate art. When the direct communication path and the communication path via the base station device of the related art can be used, it is possible to select whether or not to use the direct communication path or the communication path via a macro. Brief Description of Drawings

[Fig. 1] Fig. 1 is a diagram for describing the outline of a mobile communication system 1 according to a first embodiment.
[Fig. 2A] Fig. 2A is a first diagram for describing the configuration of an IP mobile communication network.
[Fig. 2B] Fig. 2B is a second diagram for describing the configuration of the IP mobile communication network.
[Fig. 3] Fig. 3 is a diagram for describing the functional configuration of a UE according to the first embodiment.
[Fig. 4A] Fig. 4A is a first diagram showing an example of the functional configuration managed in a storage unit of the UE.
[Fig. 4B] Fig. 4B is a second diagram showing an example of the functional configuration managed in the storage unit of the UE.
[Fig. 5] Fig. 5 is a diagram for describing the functional configuration of a ProSe Server.
[Fig. 6A] Fig. 6A is a first diagram showing an example of a communication path for each application classification and Server contact list.
[Fig. 6B] Fig. 6B is a second diagram showing an example of the communication path for each application classification and Server contact list.
[Fig. 7A] Fig. 7A is a first diagram showing an example of a proximity evaluation policy and a positional information management table.
[Fig. 7B] Fig. 7B is a second diagram showing an example of the proximity evaluation policy and the positional information management table.
[Fig. 8] Fig. 8 is a diagram for describing the functional configuration of a MME.
[Fig. 9] Fig. 9 is a diagram for describing permission information for the establishment of a communication path.
[Fig. 10] Fig. 10 is a diagram for describing a position notification procedure according to the first embodiment.
[Fig. 11] Fig. 11 is a diagram showing a case where positional information in the ProSe Server is updated.
[Fig. 12] Fig. 12 is a diagram for describing a proximity detection unnecessary procedure according to the first embodiment.
[Fig. 13] Fig. 13 is a diagram showing a case where the Server contact list based on the proximity detection unnecessary procedure is updated.
[Fig. 14] Fig. 14 is a diagram for describing the proximity detection procedure according to the first embodiment.
[Fig. 15] Fig. 15 is a diagram for describing a proximity detection process according to the first embodiment.
[Fig. 16A] Fig. 16A is a first diagram showing an example of proximity detection according to the first embodiment.
[Fig. 16B] Fig. 16B is a second diagram showing an example of the proximity detection according to the first embodiment.
[Fig. 16C] Fig. 16C is a third diagram showing an example of the proximity detection according to the first embodiment.
[Fig. 17] Fig. 17 is a diagram for describing a communication path establishment procedure based on a PDN connectivity request according to the first embodiment.
[Fig. 18] Fig. 18 is a diagram for describing a communication path establishment procedure based on a service request according to the first embodiment.
[Fig. 19] Fig. 19 is a diagram showing a disconnection procedure of stopping direct communication according to the first embodiment.
[Fig. 20] Fig. 20 is a diagram showing an example of a UE contact list managed in the UE.
[Fig. 21] Fig. 21 is a diagram showing an example of a Server contact list managed in the ProSe Server.
[Fig. 22A] Fig. 22A is a first diagram showing an LTE(D) availability management table and a WLAN(D) availability management table managed in the UE.
[Fig. 22B] Fig. 22B is a second diagram showing the LTE(D) availability management table and the WLAN(D) availability management table managed in the UE.
[Fig. 23] Fig. 23 is a diagram showing a Server contact list including LTE(D) availability and WLAN(D) availability in the ProSe Server.
[Fig. 24] Fig. 24 is a diagram showing a case where the LTE(D) availability and the WLAN(D) availability are updated in the Server contact list.
[Fig. 25] Fig. 25 is a diagram showing an example of a UE action policy in the UE.
[Fig. 26] Fig. 26 is a diagram showing an example of a proximity evaluation policy in the ProSe Server.
[Fig. 27] Fig. 27 is a diagram showing an example of proximity evaluation.
[Fig. 28] Fig. 28 is a diagram showing an example in which the ProSe Server is provided in the IP mobile communication network.

### Description of Embodiments

Hereinafter, embodiments for implementing the present invention will be described with reference to the drawings. For example, in the present embodiment, embodiments of a mobile communication system when the present invention is applied will be described in detail with reference to the drawings. LTE Direct is referred to as LTE(D), and WLAN Direct is referred to as WLAN(D). Here, the LTE(D) implies that a direct communication path is established between UEs by using an LTE communication method, and the WLAN(D) implies that a direct communication path is established between the UEs by using a WLAN communication method.

### [1. First Embodiment]

First, a first embodiment to which the present invention is applied will be described with reference to the drawings.

### [1.1 Outline of Mobile Communication System]

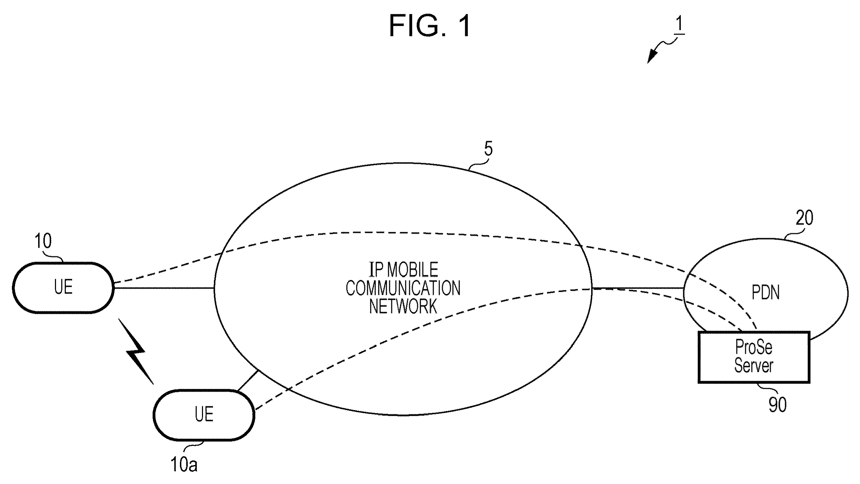

Fig. 1 is a diagram for describing the outline of a mobile communication system 1 according to the present embodiment. As shown in this drawing, the mobile communication system 1 includes the UE (mobile station device) 10, the UE (mobile station device) 10a, and a PDN (Packet Data Network) 20, which are connected via an IP mobile communication network 5. A ProSe Server 90 is provided in the PDN 20. The ProSe Server 90 may be provided in any position of the PDN 20. The UE 10 and the UE 10a ensure secure communication with the ProSe Server 90, and thus, the ProSe Server 90 can transmit and receive control information or data.

The UE 10 and the UE 10a are in proximity to each other, and are positioned in places where the UEs can discover each other in proximity discovery for starting the transmission and reception of data through ProSe.

For example, the IP mobile communication network 5 may be a network which includes a core network and a wireless access network operated by a mobile communication provider, or may be a broadband network operated by a fixed-line communication provider. The IP mobile communication network operated by the mobile communication provider will be described below in detail.

The broadband network refers to an IP communication network operated by a communication provider that is connected through ADSL (Asymmetric Digital Subscriber Line) and provides high-speed communication using a digital line such as an optical fiber. The broadband network is not limited to the above example, but may be a network that allows for wireless access using WiMAX (Worldwide Interoperability for Microwave Access).

The UE 10 is a communication terminal that is connected using an access system such as LTE or WLAN, and can be connected to the IP network by being connected using a built 3GPP LTE communication interface or WLAN communication interface.

As a specific example, the UE is a portable telephone terminal or a smartphone, or the UE is a household electrical appliance, a tablet computer, or a personal computer, which has a communication function.

The PDN 20 refers to a network that provides a network service for transmitting and receiving data in packets, and is, for example, the internet or an IMS.

The PDN 20 is connected to the IP access network by using a wired line. For example, the PDN is established by ADSL (Asymmetric Digital Subscriber Line) or an optical fiber. The PDN is not limited to the above example, but may be a wireless access network such as LTE (Long Term Evolution), WLAN (Wireless LAN), or WiMAX (Worldwide Interoperability for Microwave Access).

### [1.1.1 Configuration Example of IP Mobile Communication Network]

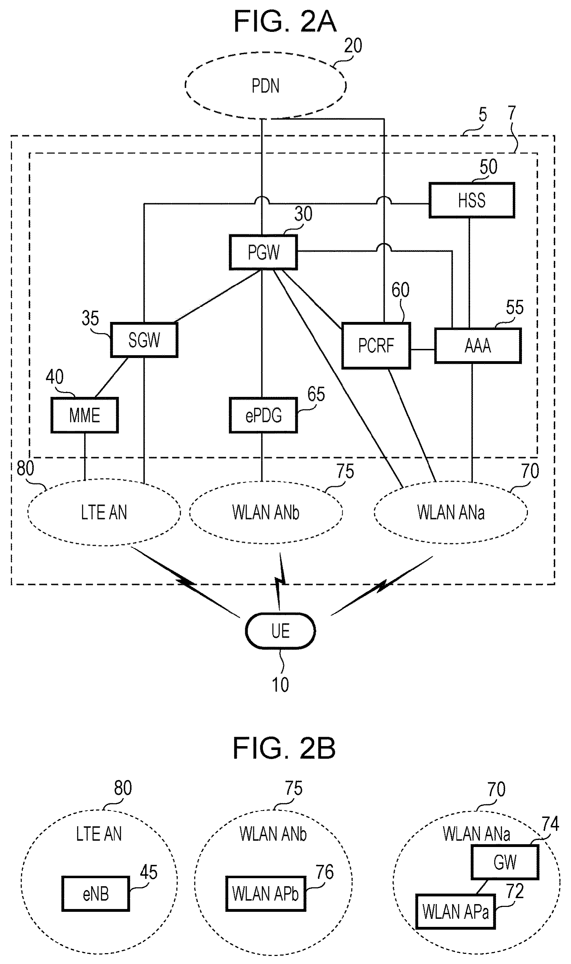

As shown in Figs. 2A and 2B, the mobile communication system 1 includes the UE 10, the IP mobile communication network 5, and the PDN 20 (Packet Data Network). The UE 10a is a UE different from the UE 10 and has the same configuration as that of the UE 10, and thus, the description thereof will be omitted. In addition to the UE 10 or the UE 10a, a plurality of UEs may be connected to the IP mobile communication network 5, but will be omitted for the sake of simplification in the drawings. The IP mobile communication network 5 includes a core network 7 and the respective wireless access networks. The detailed configuration of the core network 7 is illustrated in Fig. 2A.

The PDN 20 is a network that provides a network service for transmitting and receiving data in packets as described in Fig. 1, and is, for example, the Internet or an IMS.

The core network 7 includes a PGW (access control device) 30 (Packet Data Network Gateway), a SGW 35 (Serving Gateway), a MME 40 (Mobile Management Entity), a HSS 50 (Home Subscriber Server), an AAA 55 (Authentication, Authorization, and Accounting), a PCRF 60 (Policy and Charging Rules Function), and an ePDG 65 (enhanced Packet Data Gateway).

The wireless access network may include a plurality of different access networks. The respective access networks are connected to the core network 7. The UE 10 can be wirelessly connected to the wireless access network.

The wireless access network may be implemented using an LTE access network (LTE AN 80) that can be connected in an LTE access system, or an access network that can be connected in a WLAN access system.

The access network that can be connected in the WLAN access system may include a WLAN access network b (WLAN ANb 75) that is connected using the ePDG 65 as a connection device to the core network 7, and a WLAN access network a (WLAN ANa 70) that is connected to the PGW 30, the PCRF 60 and the AAA 55.

The devices have the same configurations as those of the devices of the related art in the mobile communication system using an EPS, and thus, the detailed description thereof will be omitted, but the functions thereof will be briefly described. The PGW 30 is connected to the PDN 20, the SGW 35, the ePDG 65, the WLAN ANa, the PCRF 60 and the AAA 55, and serves as a gateway device between the core network 7 and the PDN 20 to deliver user data.

The SGW 35 is connected to the PGW 30, the MME 40, and the LTE AN 80, and serves as a gateway device between the LTE AN 80 and the core network 7 to deliver user data.

The MME 40 is connected to the SGW 35 and the LTE AN 80, and is an access control device that performs access control of the UE 10 via the LTE AN 80.

The HSS 50 is connected to the SGW 35 and the AAA 55, and manages subscriber information. The AAA 55 is connected to the PGW 30, the HSS 50, the PCRF 60 and the WLAN ANa 70, and performs access control of the UE 10 which is connected via the WLAN ANa 70. The PCRF 60 is connected to the PGW 30, the WLAN ANa 70 and the AAA 55, and manages QoS for the delivery of user data.

The ePDG 65 is connected to the PGW 30 and the WLAN ANb 75, and serves as a gateway device between the core network 7 and the WLAN ANb 75 to deliver user data.

As shown in Fig. 2B, each of the wireless access networks includes a device (for example, base station device or access point device) to which the UE 10 is actually connected. Although various devices compliant with the wireless access networks are considered as a device used for connection, the LTE AN 80 includes the eNB 45 in the present embodiment. The eNB 45 is a wireless base station to which the UE 10 is connected in the LTE access system, and the LTE AN 80 may include one wireless base station or a plurality of wireless base stations.

The WLAN ANa 70 includes a WLAN APa 72, and a GW 74 (Gateway). The WLAN AP 72 is a wireless base station to which the UE 10 is connected in the WLAN access system, and the WLAN AN 70 may include one wireless base station or a plurality of wireless base stations. The GW 74 is a gateway device between the core network 7 and the WLAN ANa 70. The WLAN APa 72 and the GW 74 may be implemented by a single device.

As stated above, the gateway included in the WLAN ANa 70 can be connected to the plurality of devices within the core network 7. When the provider that operates the core network 7 and the provider that operates the WLAN ANa 70 are different from each other, such a configuration may be operated when a trust relationship is established by an operational contract or agreement between the providers. In other words, the WLAN APa 72 is an access network having reliability for the provider that operates the core network 7.

The WLAN ANb 75 includes a WLAN APb 76. The WLAN AP 76 is a wireless base station to which the UE 10 is connected in the WLAN access system, and the WLAN AN 75 includes one wireless base station or a plurality of wireless base stations.

As mentioned above, the WLAN ANb 75 is connected to the core network 7 by using the ePDG 65 which is the device included in the core network 7 as a gateway. The ePDG 65 has a security function for ensuring safety. When the provider that operates the core network 7 and the provider that operates the WLAN ANa 70 are different from each other, such a configuration is operated when a trust relationship is not established by an operational contract or agreement between the providers. In other words, the WLAN APa is an access network that does not have reliability for the provider that operates the core network 7, and provides safety in the ePDG 65 included in the core network 7.

In the present specifications, the UE 10 being connected to the respective wireless access networks means that the UE is connected to the base station devices or the access points included in the respective wireless access networks, and data or signal to be transmitted and received passes through the base station device or the access point.

For example, the UE 10 being connected to the LTE AN 80 means that the UE 10 is connected via the eNB 45, and the UE being connected to the WLAN ANa 70 means that the UE is connected via the WLAN APa 72 and/or the GW 74. The UE 10 being connected to the WLAN ANb 75 means that the UE 10 is connected to the WLAN APb 76.

### [1.2 Device Configuration]

Next, the configurations of the respective devices will be simply described with reference to the drawings.

### [1.2.1 Configuration of UE]

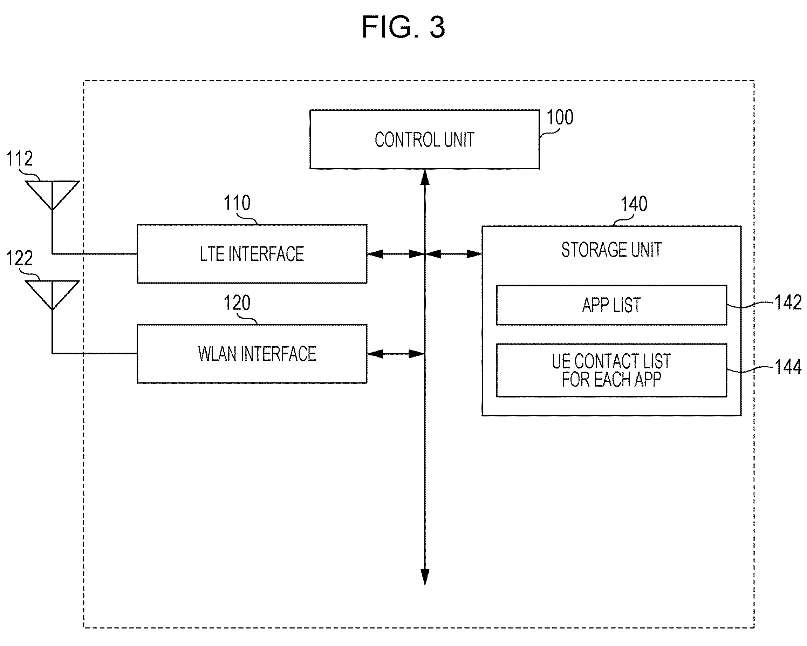

Fig. 3 shows the functional configuration of the UE 10 according to the present embodiment. In the UE 10, an LTE interface 110, a WLAN interface 120 and a storage unit 140 are connected to a control unit 100 through a bus.

The control unit 100 is a functional unit for controlling the UE 10. The control unit 100 realizes various processes by reading various programs stored in the storage unit 140 and executing the read program.

The LTE interface 110 is a functional unit that transmits and receives data through wireless communication by using an LTE access method. An external antenna 112 is connected to the LTE interface 110.

The UE 10 may perform communication by being connected to an LTE base station through the LTE interface and being connected to the IP access network 5, or may perform communication by establishing a direct communication path with another UE without using the LTE base station.

The WLAN interface 120 is a functional unit that transmits and receives data through wireless communication by using a wireless LAN access method. An external antenna 122 is connected to the WLAN interface 120.

The UE 10 may perform communication by being connected to a WLAN base station through a WLAN interface and being connected to the IP access network 5, or may perform communication by establishing a direct communication path with another UE without using the WLAN base station.

The storage unit 140 is a functional unit that stores programs and data required for various operations of the UE 10. For example, the storage unit 140 is a semiconductor memory or a hard disk drive (HDD). An APP list 142 is stored in the storage unit 140.

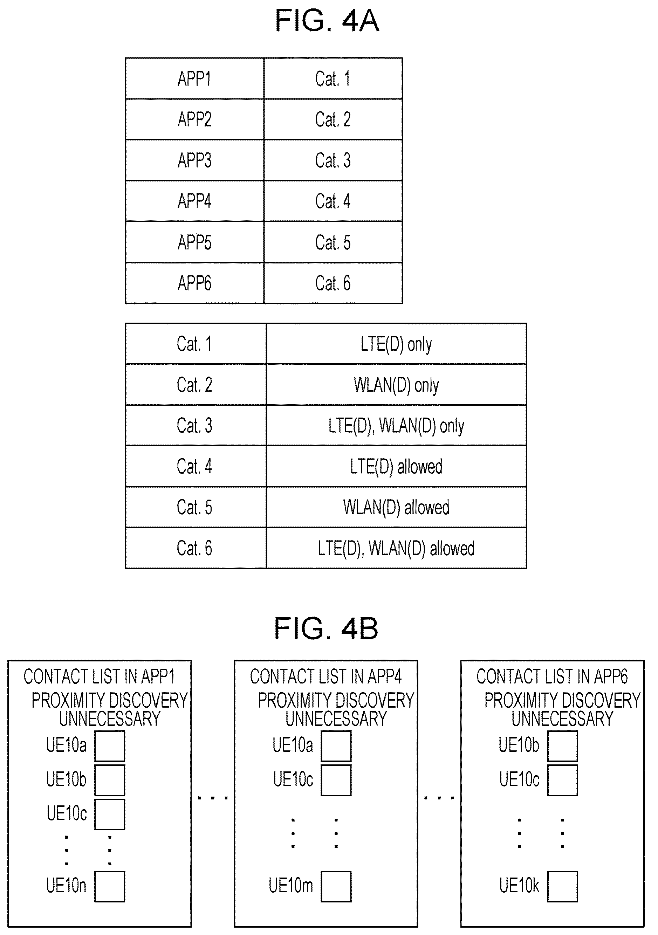

Applications that can be used by the UE 10 are stored in the APP list 142. Fig. 4A is a diagram showing an example of the APP list 142. In the APP list 142 of Fig. 4A, the applications that can be used by the UE 10 are represented as APP 1 to APP 6.

The application may be managed by being distinguished from a different application according to data classification such as VoIP, video streaming, video file, or text.

Alternatively, the application may be managed by distinguishing communication using middleware such as IMS as a single application.

Alternatively, an individual application such as Skype or LINE may be managed by being distinguished by an application name or an application ID.

Alternatively, the application may be managed by being distinguished as a different application by using a combination thereof.

Here, the applications that can be used by the UE 10 may be installed in the manufacturing step thereof, or may be installed by a user operation.

The UE 10 may be managed by correlating information of a communication path that can be used for each application with the application. For example, as shown in Fig. 4A, categories (Cat. 1 to Cat. 6) are associated with the applications (APP 1 to APP 6). The respective categories are respectively correlated with the communication paths that can be used by the applications.

When it is not able to perform the direct communication of the LTE(D), the Cat. 1 indicates that it is not able to transmit and receive data. When it is not able to perform the direct communication of the WLAN(D), the Cat. 2 indicates that it is not able to perform transmit and receive data. When it is not able to perform the direct communication of the LTE(D) and the direct communication of the WLAN(D), the Cat. 3 indicates that it is not able to perform transmit and receive data.

The Cat. 4 indicates that it is possible to use the direct communication of the LTE(D). The Cat. 4 means that the UE 10 can transmit and receive data via a macro when the UE 10 is not able to perform the direct communication of the LTE(D), in addition to the direct communication of the LTE(D).

Here, the communication via a macro means that the UE 10 transmits and receives data by using a communication path via a macro base station such as the eNB 45 using the LTE communication method. In this case, the UE 10 may request the establishment of PDN connection with the PGW 30 through the eNB 45 and the SGW 35, and may perform communication using the established PDN connection. The UE 10 may request the establishment of a radio bearer with the eNB 45, and the establishment of an EPS bearer with the SGW 35 and the PGW 30, and may perform communication using the established bearer.

Meanwhile, when the UE 10 performs communication with the UE 10a, the UE 10a as a communication partner also establishes a communication path via a macro as in the UE 10. As a result, the UE 10 and the UE 10a perform the communication between the UEs by using the established communication paths via a macro.

The Cat. 5 indicates that it is possible to use the direct communication of the WLAN(D). The Cat. 5 means that the UE 10 can transmit and receive data via the macro when the UE 10 is not able to perform the direct communication of the WLAN(D), in addition to the direct communication of the WLAN(D).

The Cat. 6 indicates that it is possible to use the direct communication of the LTE(D) and/or WLAN(D). The Cat. 6 indicates that the UE 10 can transmit and receive data via the macro when the UE 10 is not able to perform the direct communication of the LTE(D) and/or the direct communication of the WLAN(D), in addition to the direct communication path of the LTE(D) and/or the direct communication of the WLAN(D).

Fig. 4B is a diagram showing UE contact lists 144 for APPs. In Fig. 4B, the contact lists from the APP 1 to the APP 6 are managed. In the UE contact lists 144 for APPs, the UEs capable of performing direct communication through the ProSe are managed. Alternatively, the UEs capable of performing communication using the respective APPs may be managed.

Proximity discovery unnecessary check boxes indicating that it is not able to perform the proximity discovery on UEs may be managed in correlation with the UEs of the UE contact lists 144.

When the proximity discovery unnecessary check boxes are checked, the UEs of the UE contact lists 144 correlated with the checked check boxes means that it is not able to perform the proximity detection on the UE 10. That is, the UE 10 may manage whether or not to allow the respective UEs of the UE contact lists 144 to perform the proximity detection. The proximity discovery unnecessary check boxes may be updated through configuration performed by a user.

Although it has been described in the present example that whether or not the proximity discovery is necessary is correlated with the respective APPs of the UE 10, whether or not the proximity discovery is necessary may be managed in correlation with the UE contact lists 144. In this case, whether or not the proximity discovery is necessary may be configured for all the UEs of the contact lists all at once.

Whether or not the proximity discovery is necessary may be managed in correlation with the UE contact lists 144 of all the applications. In this case, whether or not the proximity discovery is necessary may be configured for all the UEs of all the contact lists all at once.

That is, when the UE of the UE contact list 144 detects a proximity UE, the UE 10 can exclude the UE 10 itself from a detection target based on the proximity discovery unnecessary check boxes.

As shown in Fig. 4B, the UEs capable of performing the direct communication through the ProSe may be managed for each application, and the fact that the proximity discovery is unnecessary may be managed for each UE managed by the contact lists.

The UE 10a to the UE 10n shown in Fig. 4B are UEs different from the UE 10 and the configurations thereof are the same as that of the UE 10, and thus, the detailed description thereof will be omitted.

### [1.2.2 Configuration of ProSe Server]

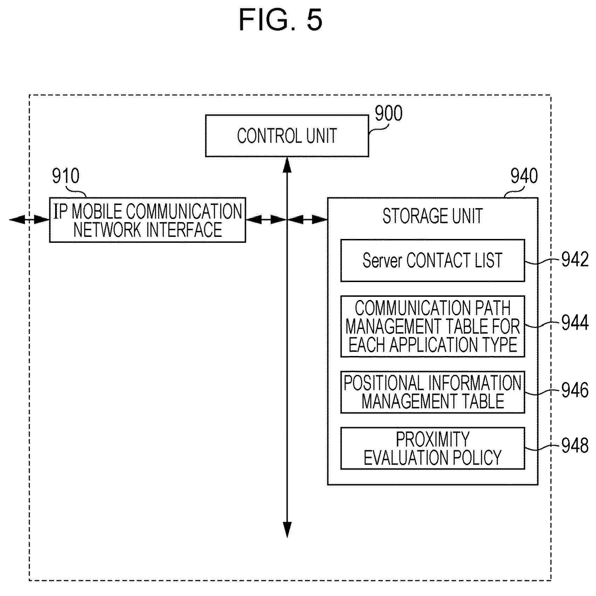

Fig. 5 shows the functional configuration of the ProSe Server 90. In the ProSe Server 90, an IP mobile communication network interface 910 and a storage unit 940 are connected to a control unit 900 through a bus.

The control unit 900 is a functional unit for controlling the UE 10. The control unit 900 realizes various processes by reading various programs stored in the storage unit 940 and executing the read program.

The IP mobile communication network interface 910 is a functional unit for allowing the ProSe Server 90 to be connected to the IP mobile communication network 5.

The storage unit 940 is a functional unit that records programs and data required for various operations of the UE 10. For example, the storage unit 940 is a semiconductor memory, or a hard disk drive (HDD).

The storage unit 940 stores Server contact lists 942, a communication path management table 944, a positional information management table 945, and a proximity evaluation policy 948.

The Server contact lists 942, the communication paths for application classifications 944 and the positional information management table 946 may be stored in an external device, or may be stored in, for example, the HSS 50.

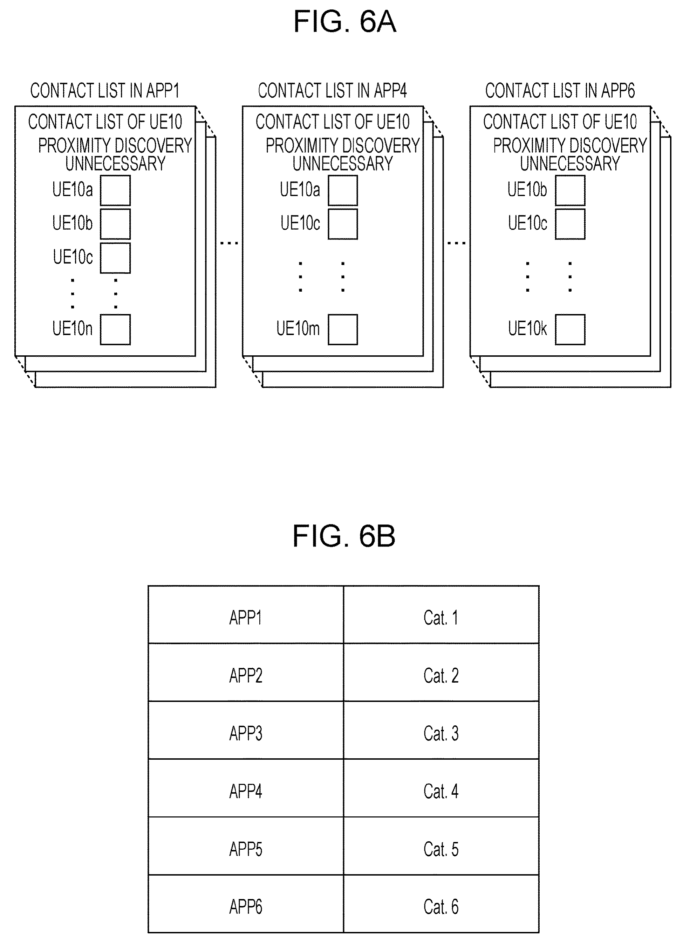

Fig. 6A shows an example in which the Server contact lists 942 are managed for applications that can be used by a certain UE in the example of the Server contact lists 942. In Fig. 6A, contact lists in the APP 1 to the APP 6 of the UE 10 are represented.

The application may be managed by being distinguished from a different application according to data classification such as VoIP, video streaming, video file, or text.

Alternatively, the application may be managed by distinguishing communication using middleware such as IMS as a single application.

Alternatively, an individual application such as Skype or LINE may be managed by being distinguished by an application name or an application ID.

Alternatively, the application may be managed by being distinguished as a different application by using a combination thereof.

In the contact lists of Fig. 6A, UE lists (UE 10a to UE 10n) that can perform the direct communication with the UE 10 through the ProSe may be managed by being correlated with proximity discovery unnecessary check boxes.

The proximity discovery unnecessary check box being checked means that the UE 10 is not able to detect the UEs managed as the proximity discovery unnecessary, as proximity terminals. That is, the ProSe Server 90 can manage whether or not to determine the respective UEs of the Server contact lists 942 as targets to be subjected to the proximity detection for each application of the UE 10. The proximity discovery unnecessary check boxes may be updated through configuration performed by the user.

Although it has been described in the present example that whether or not to the proximity discovery is necessary is correlated with the respective UEs of the Server contact lists 942, whether or not to the proximity discovery is necessary may be managed in correlation with the Server contact lists 942. In this case, whether or not to the proximity discovery is necessary may be configured for all the UEs of the Server contact lists 942 all at once.

Whether or not to the proximity discovery is necessary may be managed in correlation with all the applications. In this case, whether or not to the proximity discovery is necessary may be configured for all the UEs of all the Server contact lists 942 of the UE 10 all at once. In the above description, although the contact list for each application of the UE 10 has been described, the ProSe Server 90 similarly stores the ProSe Server contact lists 942 of the UEs (for example, UE 10a to UE 10n) different from the UE 10.

Fig. 6B shows an example of the communication path management table 944 for each application classification. In the communication path management table 944 for each application classification, the applications are managed in correlation with the communication paths that can be used in the applications.

The application may be managed by being distinguished from a different application according to data classification such as VoIP, video streaming, video file, or text.

Alternatively, the application may be managed by distinguishing communication using middleware such as IMS as a single application.

As the communication path that can be used in the application, the communication path such as the LTE(D), the WLAN(D) or another method that can be used is managed in correlation with each application.

In the example of Fig. 6B, the categories (Cat. 1 to Cat. 6) that transmit and receive data through the ProSe permitted by the mobile communication provider are managed for applications or services.

The Cat. 1 indicates that it is possible to use the direct communication of the LTE(D), the Cat. 2 indicates that it is possible to use the direct communication of the WLAN(D), and the Cat. 3 indicates that it is possible to use the direct communication of the LTE(D) and the direct communication of the WLAN(D). In the case of the Cat. 3, the UE 10 can selectively use any one of the LTE(D) and the WLAN(D).

For example, since the APP 1 is associated with the Cat. 1, the APP 1 is supported by only the direct communication of the LTE(D). Since the APP 2 is associated with the Cat. 2, the APP 2 is supported by only the direct communication of the WLAN(D). Since the APP 3 is associated with the Cat. 3, the APP 3 is supported by only the direct communication of the LTE(D) and the direct communication of the WLAN(D). When it is possible to use the LTE(D) and the WLAN(D) as in the Cat. 3, the UE 10 can select the LTE(D) or the WLAN(D).

Since the APP 4 is associated with the Cat. 4, the UE 10 can perform the direct communication of the LTE(D). In the case of the Cat. 4, the UE 10 can transmit and receive data via the macro when the UE 10 is not able to perform the direct communication of the LTE(D), in addition to the direct communication of the LTE(D).

Since the APP 5 is associated with the Cat. 5, the UE 10 can perform the direct communication of the WLAN(D). In the case of the Cat. 5, the UE 10 can transmit and receive data via the macro when the UE 10 is not able to perform the direct communication of the WLAN(D), in addition to the direct communication of the WLAN(D).

Since the APP 6 is associated with the Cat. 6, the UE 10 can perform the direct communication of the LTE(D) and/or the direct communication of the WLAN(D). In the case of the Cat. 6, the UE 10 can transmit and receive data via the macro when the UE 10 is not able to perform the direct communication of the LTE(D) and/or the direct communication of the WLAN(D), in addition to the direct communication of the LTE(D) and/or the direct communication of the WLAN(D).

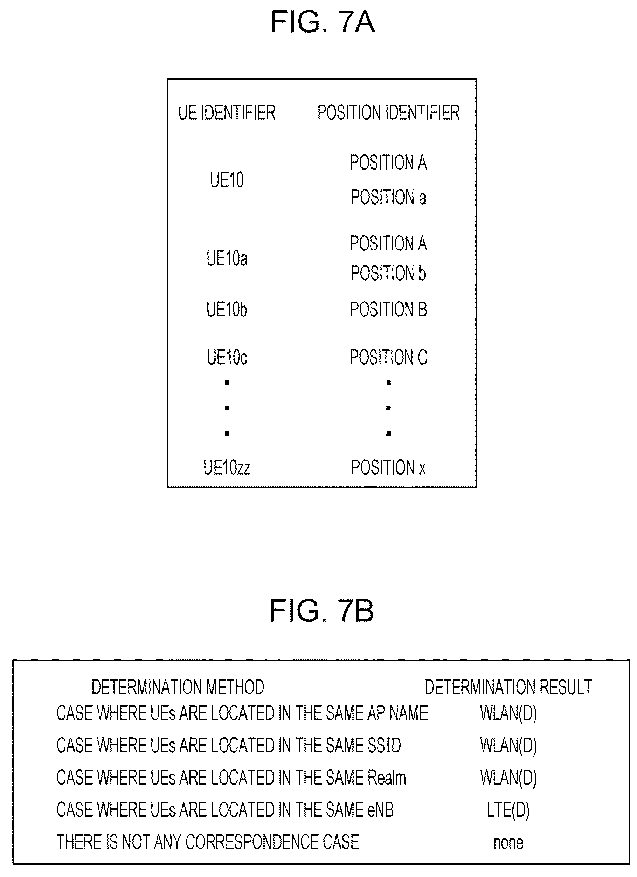

Fig. 7A shows an example of the positional information management table 946. In the positional information management table of Fig. 7A, positional information items of the UEs capable of performing the direct communication through the ProSe are stored for the respective UEs. The ProSe Server 90 manages the positional information items notified from the UEs in the positional information management table 946. In Fig. 7A, the UE 10 is provided in a position A and a position a, and the UE 10a is provided in a position A and a position b. The UE 10b is provided in a position B, the UE 10c is provided in a position C, and the UE 10zz is provided in a position x. As shown in Fig. 7A, the positional information managed for each UE may be one or plural.

The position A and the position a of the UE 10 may be, for example, identification information of an LTE base station and identification information of a WLAN base station to which the UE 10 is connected. In addition, the positional information managed for each UE may be positional information calculated by the GPS, or information for identifying an area. The positional information managed for each UE may be a SSID, a BSSID, or a Realm used for connection in the WLAN, or other information.

Although the position for each UE is managed irrespective of the service and application in Fig. 7A, the position for each UE may be managed for each application or each service. When the position for each UE is managed for service, the position for each UE may be managed by being included in the contact list.

Fig. 7B shows an example of the proximity evaluation policy 948. The proximity evaluation policy 948 includes a rule for evaluating whether or not the UE 10 and another UE different from the UE 10 are positioned in proximity based on the positional information management table 946. The ProSe Server 90 may evaluate whether or not the communication path (LTE(D) and/or WLAN(D)) of the direct communication can be used between a communication source UE and a communication target UE based on the proximity evaluation policy 948.

Fig. 7B shows an example of the determined result and the content of the policy through the proximity evaluation policy 948. The content of the policy manages determination methods using an access point (AP) name, a service set identifier (SSID), a Realm (facility information), or an eNB ID (base station information of the mobile communication provider).

Here, the AP, SSID, and Realm are identifiers that can be obtained by the UE when the UE is connected to the WLAN, are obtained in any one of the WLAN APa 72 and the WLAN APb 76, and can be notified to the ProSe Server 90. The ProSe Server 90 manages the positions based on the notification of the positional information items of the UEs. When the UE 10 is connected to the WLAN APa 72 or the WLAN APb 76, all of the AP, the SSID and the Realm may be obtained in some cases, or only any one of the AP, the SSID and the Realm may be obtained in some cases.

That is, the UE 10 may notify the ProSe Server 90 of all of the AP, the SSID and the Realm in some cases, or may notify the ProSe Server of only any one of the AP, the SSID and the Realm in some cases. Even when the AP, the SSID and the Realm are obtained from the WLAN (WLAN APa 72 or WLAN APb 76), the UE 10 may not notify the ProSe Server 90 of any one of the AP, the SSID and the Realm or some thereof in some cases.

The eNB ID is an identifier that can be obtained when the UE 10 is connected to the eNB 45. When the eNB ID is newly obtained from the eNB 45, the UE 10 notifies the ProSe Server 90 of the obtained eNB ID. Even when the eNB ID is newly obtained, the UE 10 may not notify the ProSe Server 90 in some cases.

The contents of the respective policies will be described. The AP name is an identification name for identifying each WLAN. Since the UEs connected to the same AP are located in the area of the single WLAN and are in proximity to each other with a very high probability, these UEs are determined to use the WLAN(D).

The SSID is an identifier for identifying the WLAN. One SSID may be configured for only a single WLAN, or one SSID may be configured for a plurality of WLANs. When one SSID is configured for the plurality of WLANs, since an office that is not covered by one WLAN may be present, the UEs that are positioned in the same SSID are in proximity to each other with a very high probability but not as high as the UEs that are positioned in the same AP are in proximity to each other, and thus, these UEs are evaluated to be able to use the

### WLAN(D).

The Realm is a name indicating facility information in the WLAN. Since the Realm is the name indicating the facility information, the UEs which have the same Realm and are connected to the WLAN are located in the facility corresponding to the Realm. Thus, the UEs positioned in the same Realm are in proximity to each other with a high probability but not as high as the UEs positioned the same AP or the same SSID are in proximity to each other, and thus, these UEs are evaluated to be able to use the WLAN(D).

The eNB 45 is an LTE base station managed by the mobile communication provider. When the UE 10 is connected to the eNB 45 in order to transmit and receive data to and from the LTE base station, the UE can detect the eNB ID. The UE 10 located in the LTE base station is positioned within a circular area having a radius of 500 m. Since two UEs are located in the same eNB, these UEs are evaluated to be able to use the LTE(D).

When there is not any correspondence, the UE is evaluated to be none. In this case, there are no usable direct communication paths, and the ProSe Server 90 may notify the UE 10 such that unnecessary proximity discovery is not performed.

### [1.2.3 Configuration of MME]

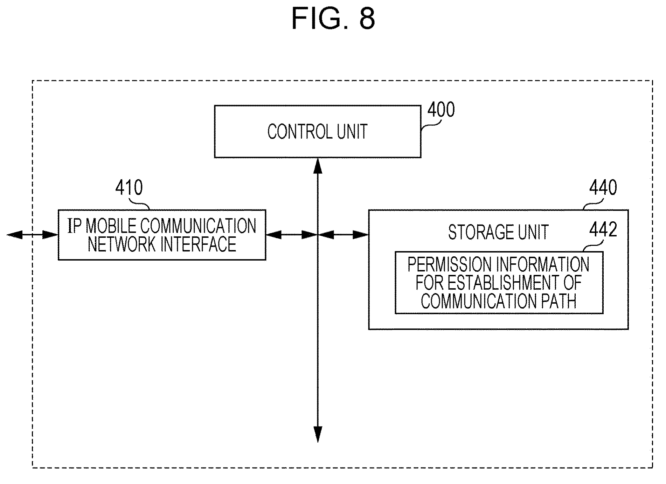

Fig. 8 shows the functional configuration of the MME 40. In the MME 40, an IP mobile communication network interface 410, and a storage unit 440 are connected to a control unit 400 through a bus.

The control unit 400 is a functional unit for controlling the UE 10. The control unit 400 realizes various processes by reading various programs stored in the storage unit 440 and executing the read program.

The IP mobile communication network interface 410 is a functional unit for allowing the MME 40 to be connected to the IP mobile communication network 5.

The storage unit 440 is a functional unit that stores programs and data required for various operations of the UE 10. For example, the storage unit 440 is a semiconductor memory or a hard disk drive (HDD). Permission information 442 for communication path establishment is managed in the storage unit 440. The permission information 442 for communication path establishment may be stored in an external device, and may be stored in, for example, the HSS 50.

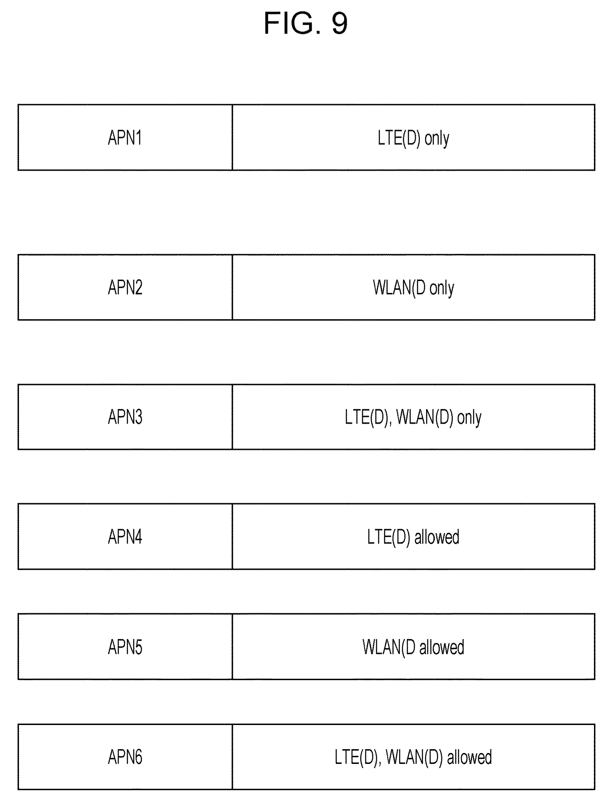

Fig. 9 shows an example of the permission information 442 for communication path establishment. In Fig. 9, the communication path to be permitted is managed in correlation with an APN. Here, the APN is connection destination information for allowing the UE 10 to transmit and receive data by being connected to the IP mobile communication network 5. Here, the UE 10 can use the communication path including a connection destination associated with the APN by notifying the permission information including the APN and being permitted from the MME 40 before the data is transmitted and received. The APN is previously configured in the manufacturing step of the UE 10 in some cases, or the APN needs to be separately configured in some cases when a SIM card is separately attached to the UE. The APN may be managed for each communication path, or may permit each communication path. For example, a plurality of APNs may be managed for communication path establishment or services to be provided, and the APN includes an APN correlated with permission information for the establishment of the communication path of the LTE(D) in the direct communication path may be managed for services, an APN correlated with permission information for the establishment of the communication path of the WLAN(D) in the direct communication path, and an APN which performs communication via the PGW 30 and is correlated with permission information for the establishment of the communication path via a macro.

In the example of Fig. 9, only the direct communication of the LTE(D) is permitted in an APN 1, only the direct communication of the WLAN(D) is permitted in an APN 2, and only the direct communication of the LTE(D) and/or the direct communication of the WLAN(D) are permitted in an APN 3. In the APN 1, the APN 2 and the APN 3, the establishment of the PDN connection between the UE 10 and the PGW 30 is not permitted as the communication path by being connected to the core network through the LTE base station or the WLAN base station.

The direct communication of the LTE(D) can be used in an APN 4. In the APN 4, the UE 10 is permitted to transmit and receive data via the macro when the UE 10 is not able to perform the direct communication of the LTE(D), in addition to the direct communication of the LTE(D).

The direct communication of the WLAN(D) can be used in an APN 5. In the APN 5, the UE 10 is permitted to transmit and receive data via the macro by establishing the communication path via a macro when the UE 10 is not able to perform the direct communication of the WLAN(D), in addition to the direct communication of the WLAN(D).

The direct communication of the LTE(D) and/or the direct communication of the WLAN(D) can be used in an APN 6. In the APN 6, the UE 10 is permitted to transmit and receive data via the macro when the UE 10 is not able to perform the direct communication of the LTE(D) and/or the direct communication of the WLAN(D), in addition to the direct communication of the LTE(D) and/or the direct communication of the WLAN(D).

That is, in the APN 4, the APN 5 and the APN 6, the establishment of the PDN connection between the UE 10 and the PGW 30 is permitted as the communication path by being connected to the core network through the LTE base station or the WLAN base station, in addition to the direct communication of the LTE(D) or the direct communication of the WLAN(D).

The MME 40 may manage the APN that can be used by the UE for each UE 40, and may determine whether or not to permit the establishment of the communication path of the UE based on the APN. The APN that can be used by the UE for each UE 40 may be plural in number. The MME 40 may manage different APNs for each UE, and for example, the MME may manage such that only the APN 1 can be used for the UE 10 and the APN 1 and the APN 2 can be used for the UE 10a different from the UE 10. The APN that can be used by the UE for each UE 40 is managed by the device such as the HSS that manages subscriber information. The MME 40 may obtain the APN that can be used by the UE or permission information for the APN by inquiring of the HSS, and may determine whether or not to permit the establishment of the communication path of the UE based on the obtained information.

Here, the permission information for the APN 1 to the APN 6 is not intended as being permitted only for these APNs, but a different communication path may be permitted in an APN different from the APN 1 to the APN 6. The APN may be managed so as not to permit the establishment of the direct communication path of the LTE(D). Similarly, the APN may be managed so as not to permit the establishment of the direct communication path of the WLAN(D).

The MME 40 may determine whether or not to permit the establishment of the communication path based on the APN notified from the UE 10. For example, when the UE 10 notifies of the APN 4 which permits the establishment of the communication path of the LTE(D) and requests the establishment of the communication path of the LTE(D), it is possible to determine whether or not to permit the establishment of the communication path of the LTE(D) based on the APN notified from the UE 10 and the permission information 442 for communication path establishment.

As stated above, the MME 40 is a control device that determines whether or not to permit the service provision and the establishment of the communication path of the UE.

### [1.3 Description of Process]

Next, embodiments of a specific process in the mobile communication system will be described. In the present embodiment, the process includes a position registration procedure performed by the UE 10, a proximity discovery procedure of starting the transmission and reception of data, and a procedure of starting the transmission and reception of data. In the following description, LTE Direct for establishing the direct communication path between the UEs by using the LTE communication method is referred to as LTE(D), and WLAN Direct for establishing the direct communication path between the UEs by using the WLAN communication method is referred to as WLAN(D). The function of the LTE(D) or the function of the WLAN(D) in the UE 10 or the UE 10a is valid.

### [1.3.1 UE Position Notification Procedure]

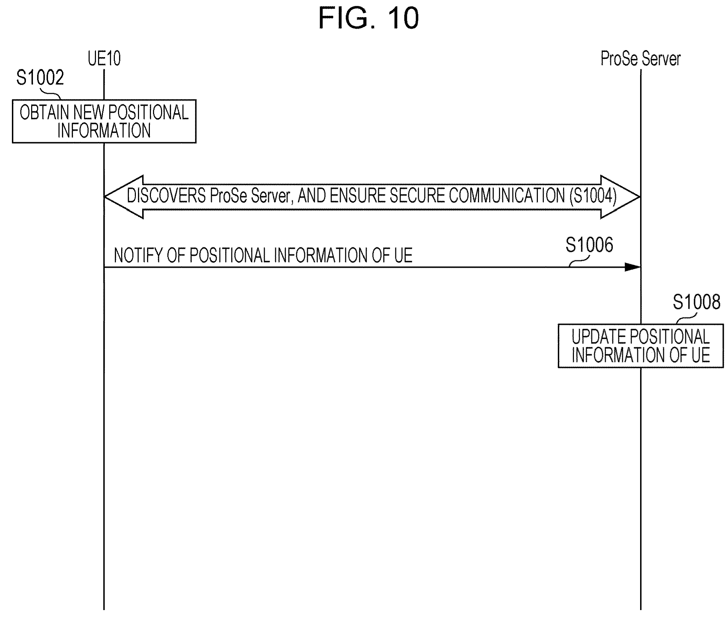

An example of the position registration procedure performed by the UE 10 will be described with reference to Fig. 10. The UE 10 detects its own positional information, and notifies the ProSe Server 90 of the detected position. The positional information may be notified using a case where new positional information is detected or a case where new positional information is obtained as its trigger, or the positional information may be notified using the start of the application or the start of the UE as its trigger. Hereinafter, an example in which the UE 10 obtains new positional information along with its own movement will be described. Although the UE 10 will be described in the following description, the same procedure may be used in the UE 10a.

Initially, the UE 10 obtains new positional information along with its own movement (S1002).

Here, new connection information is, for example, information for identifying the WLAN base station, and may be an access point (AP) name. An AP may be connected to any one of the WLAN APa 72 and the WLAN APb 76. The new connection information may be obtained when the power of the UE 10 is newly turned on even though this UE 10 does not move, or may be obtained when this UE 10 is connected to a new AP due to the ON of the WLAN function.

The new connection information may be obtained by detecting that the SSID or the Realm is obtained from the WLAN (WLAN APa 72 or WLAN APb 76) in addition to detecting that the new AP name is obtained. The new connection information may be obtained by detecting that the eNB ID obtained from the eNB 45 or TAI obtained from the MME 40 are obtained. In this case, a plurality of new connection information items may be obtained.

When GPS information is obtained, the UE 10 may notify the ProSe Server 90 of the positional information. When the GPS information is obtained, the UE 10 does not necessarily notify the ProSe Server 90 of the positional information, but may notify the ProSe Server of the positional information every a predetermined period of time.

The UE 10 that determines to notify of the connection information discovers the ProSe Server 90, and ensures secure communication with the ProSe Server 90 (S1004). The UE 10 previously retains information for being connected to the ProSe Server 90. The UE 10 may be connected to the ProSe Server 90 via the eNB 45 or the WLAN (WLAN APa 72 or WLAN APb 76).

Here, for example, the secure communication being ensured means that communication is performed after connection authentication is performed by, for example, the ProSe Server 90 or a device within another core network, or a high-security communication path using IPSec is established and communication is performed through the established communication path. Another method for increasing security may be used.

Subsequently, the UE 10 that ensures the secure communication with the ProSe Server 90 notifies the ProSe Server of positional information of the UE 10 (S1006). Here, the positional information notified from the UE 10 may be the AP name obtained from the WLAN (WLAN APa 72 or WLAN APb 76), or may be the SSID or the Realm name. The positional information may be the eNB ID obtained from the eNB 45, or may be the TAI obtained from the MME 40. Positional information obtained using the GPS may be notified. When the plurality of new connection information items is obtained, the plurality of new connection items may be notified.

The ProSe Server 90 that is notified of the positional information of the UE 10 receives the positional information of the UE 10 from the UE 10, and updates the positional information of the UE (S1008). In this case, when the plurality of positional information items (any combinations of AP, SSID, Realm, eNB ID, TAI and GPS may be used) is received from the UE 10, the ProSe Server 90 may update the plurality of positional information items of the UE 90.

In the present embodiment, the positional information is updated within the ProSe Server 90. However, when the positional information is managed in a device different from the ProSe Server 90, the positional information may be updated in this device, and this device may be, for example, the HSS 50 managed by the mobile communication provider.

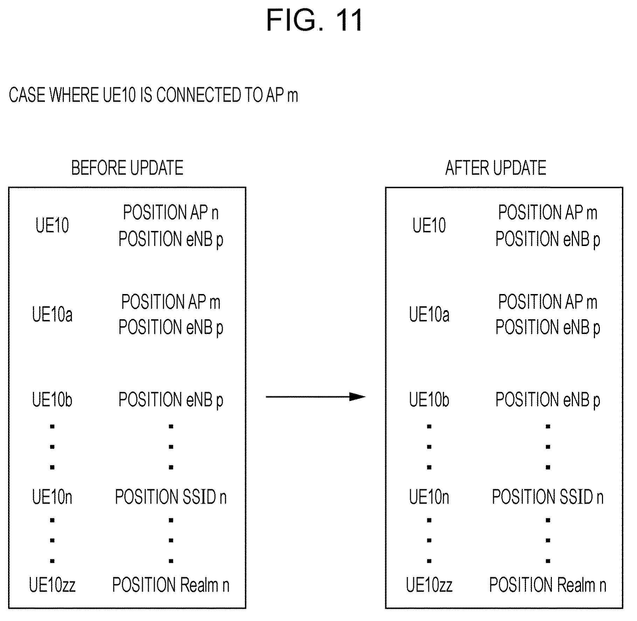

Fig. 11 shows examples of the positional information management table 946 before and after the update is performed. Here, the UE 10 notifies the ProSe Server of AP m as the positional information. The AP m may be an AP name which is identification information of the WLAN base station.

A position AP n indicates that the AP name is AP n, and a position eNB p indicates that the eNB ID is eNB p. The eNB p may be an eNB ID which is identification information of the LTE base station. A position SSID m indicates that the SSID is SSID m. A position Realm n indicates that the Realm name is Realm n.

In the positional information management table 946 before the update is performed, the UE 10 is managed as being located in the position AP n and the position eNB p. The ProSe Server 90 changes the position AP n of the UE 10 to the position AP m based on the positional information from the UE 10.

When the positional information from the UE 10 is not received, the ProSe Server 90 determines that there are no proximity UEs capable of performing the transmission and reception of data through the ProSe. Here, the transmission and reception of data through the ProSe means the transmission and reception of data in the direct communication path between the UEs based on the LTE(D) or the WLAN(D).

### [1.3.2 Proximity Discovery Unnecessary Procedure]

Next, a proximity discovery unnecessary procedure will be described. The proximity discovery unnecessary procedure is performed in order for a certain UE not to be detected as a proximity UE by another UE. Here, a procedure example in which the UE 10c different from the UE 10 is not detected as a proximity UE of the UE 10 by the UE 10 will be described.

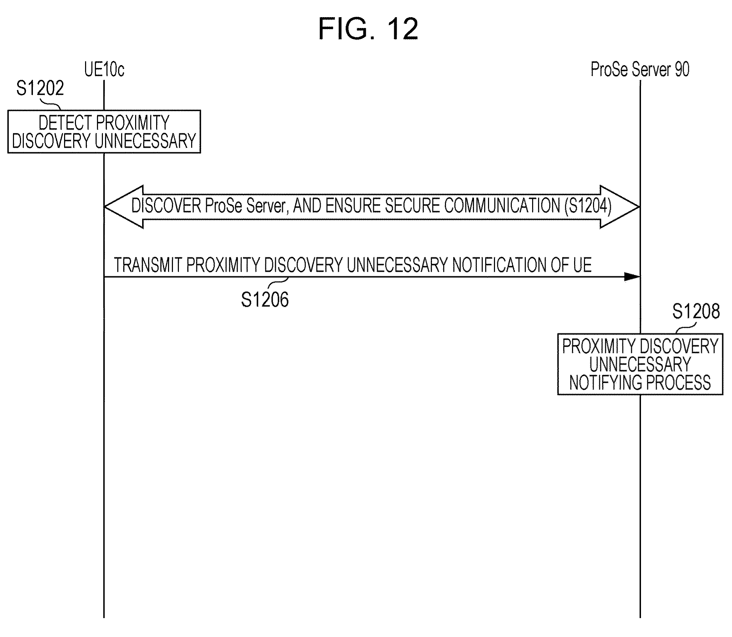

The proximity discovery unnecessary procedure will be described with reference to Fig. 12. Initially, the UE 10 detects the proximity discovery unnecessary (S1202). Here, for example, the proximity discovery unnecessary may be configured such that the UE 10c is not detected by a specific UE through a terminal operation of the user, and may be detected based on the configuration.

The UE 10 that detects the proximity discovery unnecessary ensures the secure communication with the ProSe Server 90 (S1204). When secure communication means is already ensured, the UE 10 previously obtains information indicating the position of the ProSe Server 90, and thus, it is possible to detect the ProSe Server 90.

Here, for example, the secure communication being obtained means that communication is performed after connection authentication is performed by the ProSe Server 90 or a device within another core network, or a high-security communication path using IPSec is established and communication is performed through the established communication path. Another method for increasing security may be used.

Thereafter, the UE 10c transmits a proximity discovery unnecessary notification to the ProSe Server 90 (S1206). When another UE different from the UE 10c requests the detection of proximity UEs from the ProSe Server, the UE 10c requests the excluding of the UE 10c from a proximity detection target from the ProSe Server 90 by transmitting the proximity discovery unnecessary notification. In other words, the UE 10c refuses to be detected as the proximity terminal.

Here, the UE 10c may transmit a notification including information indicating the proximity discovery unnecessary, a specific application, and information for identifying a specific UE.

In the following description, an example in which the UE 10c transmits a notification including the information indicating the proximity discovery unnecessary, the APP 4 and the UE 10 will be described.

The ProSe Server 90 receives the proximity discovery unnecessary notification from the UE 10c, and performs a proximity discovery unnecessary notifying process (S1208). The ProSe Server 90 updates the contact lists such that the UE 10c is not discovered by another UE in the proximity discovery unnecessary notifying process.

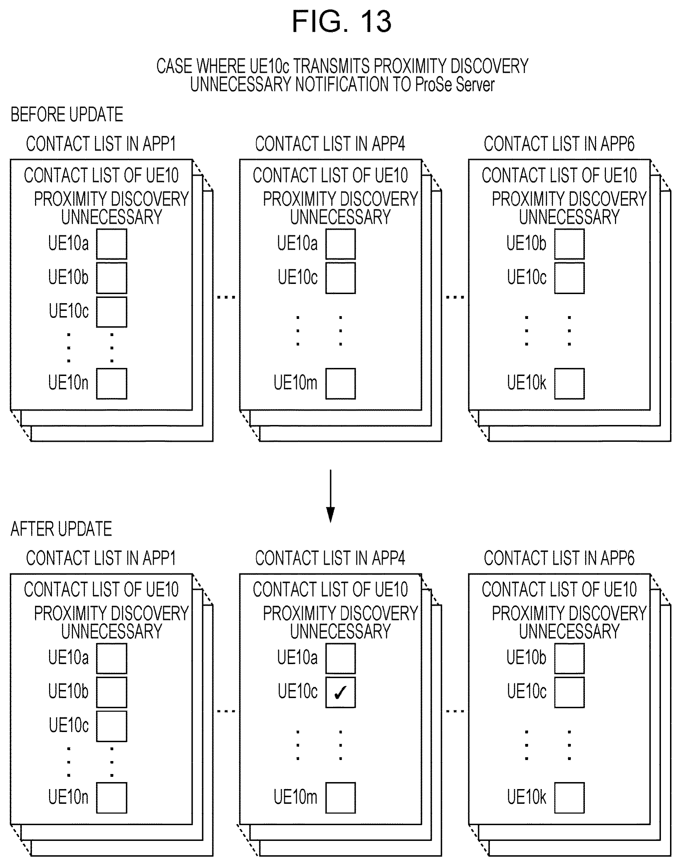

Fig. 13 shows an example of the update in the proximity discovery unnecessary notifying process. Here, an example in which the information indicating the proximity discovery unnecessary, the APP 4 and the UE 10 are received through the notification of the UE 10c will be described.

The ProSe Server 90 specifies the Server contact list 942 correlated with the APP 4 of the UE 10 based on the received information. As shown in Fig. 13, the update is performed by checking the proximity discovery unnecessary check box of the UE 10c in a non-update state in which the proximity discovery unnecessary check box of the UE 10c is not checked. Thus, when the UE 10 requests the detection of whether or not there is a proximity terminal that performs communication in the APP 4 from the ProSe Server 90, the ProSe Server 90 detects a proximity terminal by excluding the UE 10c from the target. That is, even though the UE 10c is positioned in the proximity of the UE 10, the UE 10c is not detected as the proximity terminal by the ProSe server 90.

When another UE different from the UE 10c requests the detection of the proximity UE from the ProSe Server 90, the UE 10c may request the including of the UE 10c in a proximity detection target from the ProSe Server 90 by transmitting the proximity discovery unnecessary notification. In other words, the UE 10c cancels the state in which the UE 10c refuses to be detected as the proximity terminal, and changes to a state in which the UE 10c permits to be detected as the proximity terminal.

Here, the UE 10c may transmit a notification including information indicating that the proximity discovery is permitted, a specific application, and information for identifying a specific UE.

The ProSe Server 90 receives the notification from the UE 10c, specifies the Sever contact list 942 in the same process as the process of configuring the proximity discovery necessary, and updates the Server contact list such that the UE 10c is included in the proximity discovery target by un-checking the check box based on the received information.

As stated above, UEs other than the UE 10c may request the excluding of the other UEs from the proximity discovery target, similarly to the UE 10c. Accordingly, the UE that requests the detection of the proximity UE requests the notification of information regarding the proximity UE among the UEs which do not want to be subjected to the proximity discovery. When the information regarding the proximity UE is requested from a certain UE, the ProSe Server 90 detects the proximity UE among the UEs which do not want to be subjected to the proximity discovery, and provides the information regarding the proximity UE.

Although it has been described in the present example that the UE 10c transmits the notification including the information indicating the proximity discovery unnecessary, the APP 4 and the information for identifying the UE 10, the UE 10c may transmit a notification including information the proximity discovery unnecessary and the APP 4.

In this case, the UE 10c does not refuse to be subjected to the proximity discovery by a specific UE, but the Server contact list 942 correlated with the APP 4 is configured such that the UE 10c is not subjected to the proximity discovery by all the UEs. Specifically, the ProSe Server 90 detects whether or not the UE 10c is included in the Server contact list 90 correlated with the APP 4 of all the UEs, and updates the Server contact list such that the UE 10c is not subjected to the proximity discovery by checking the check box correlated with the UE 10c.

The UE 10c may transmit a notification including information indicating the proximity discovery unnecessary and information for identifying the UE 10.

In this case, the Server contact lists 942 for all the applications correlated with the UE 10 are configured such that the UE 10c is not subjected to the proximity discovery. Specifically, all the Server contact lists 942 of the UE 10 are updated such that the proximity discovery is not performed by detecting whether or not the UE 10c is listed and by checking the check box correlated with the UE 10c.

### [1.3.3 Proximity Detection Procedure]

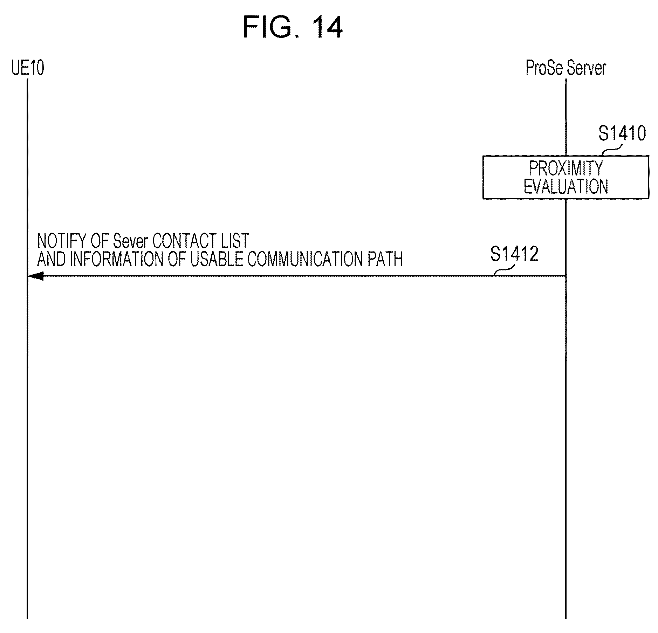

A proximity evaluation process for allowing the ProSe Server 90 to start the transmission and reception of data will be described. A proximity evaluation procedure by determining to start the transmission and reception of data will be described with reference to Fig. 14. The ProSe Server 90 may start the proximity evaluation procedure based on the notification of the positional information of the UE, or may start the proximity evaluation procedure based on the notification of the proximity discovery unnecessary. Alternatively, the ProSe Server may start the proximity evaluation procedure at any timing. The result (the notification of the contact list of S1412) of the proximity detection is notified to the UE 10, but may be similarly used in the UE 10a.

First, the ProSe Server 90 shown in Fig. 14 initially performs a proximity evaluation process in the proximity evaluation procedure (S1410). In the proximity evaluation process, it is evaluated whether or not the UE within the contact list 942 of the UE 10 and the UE 10 that transmits the positional information in a UE position registration procedure are positioned in proximity to each other. It may be evaluated whether or not the direct communication based on the LTE(D) or the WLAN(D) is performed.

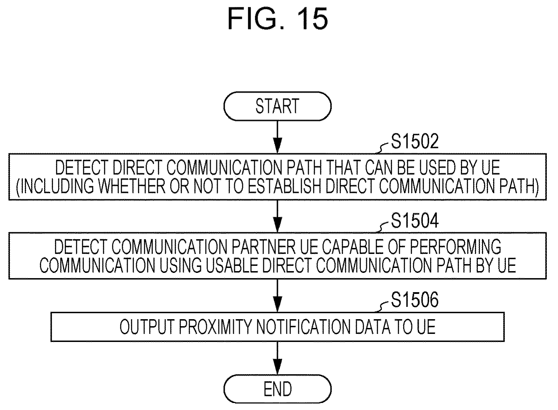

Fig. 15 shows an example of a procedure of the proximity evaluation process. In the present example, an example in which the UE 10 performs the position registration, the ProSe Server 90 performs the proximity evaluation process on the UE 10 after the position registration procedure is completed will be described. Initially, the direct communication path that can be used by the UE 10 is detected (S1502). Here, in order to detect the direct communication path that can be used by the UE 10, the ProSe Server 90 may detect the application based on the communication path management table 944 for each application classification. The ProSe Server 90 may detect from the direct communication path that can be used by the UE 10 based on the communication path management table 944 for each application classification. The ProSe Server may detect all the applications of the contact lists of the UE 10 managed in the Server contact list 942. Alternatively, the UE 10 may notify the ProSe Server 90 of the APP requested for the detection, and the ProSe Server 90 may detect the direct communication path that can be used for the APP 4.

Thus, the ProSe Server 90 can detect that the communication path based on the LTE(D) can be used for the APP 4, as the direct communication path that can be used by the UE 10. The ProSe Server 90 can detect that the communication path based on the LTE(D) can be used for the APP 1, as the direct communication path that can be used by the UE 10. The ProSe Server can detect that the communication path based on the WLAN(D) can be used for the APP 2. The ProSe Server can detect that the communication path based on the LTE(D) or the communication path based on the WLAN(D) can be used for the APP 3. The ProSe Server can detect that the communication path based on the WLAN(D) can be used for the APP 5. The ProSe Server can detect that the communication path based on the WLAN(D) or the communication path based on the LTE(D) can be used for the APP 6.

Subsequently, the proximity UE of the UE 10 is detected based on the direct communication path that can be used by the UE 10 detected in S1502 (S1504). Here, in order to detect the UE as the communication partner that can communicate with the UE, the ProSe Server 90 may detect the UE by using the proximity evaluation policy 948, the positional information management table 946 and the Server contact list 942 of the UE 10.

For example, it may be determined whether or not the UE is located in proximity by extracting the UE 10, the positional information of the UE in the Server contact list 942 of the APP 4 of the UE 10, and the positional information of the UE 10 from the positional information management table 942 correlated with each UE and comparing the two extracted positional information items.

For example, as shown in Fig. 7B, the determination method based on the positional information may be performed by determining that two UEs are located in proximity enough to perform the communication based on the WLAN(D) since the two UEs are located in the same WLAN base station. The determination method may be performed by determining that two UEs are located in proximity enough to perform the communication based on the WLAN(D) since the two UEs are located in the WLAN base stations having the same SSID. The determination method may be performed by determining that two UEs are located in proximity enough to perform the communication based on the WLAN(D) since the two UEs are located in the WLAN base stations having the same Realm. The determination method may determine that two UEs are located in proximity enough to perform the communication based on the LTE(D) since the two UEs are located in the same LTE base station (eNB). When there is not any correspondence case, the determination method may be performed by determining that two UEs are separated at a distance enough to perform neither the communication based on the WLAN(D) nor the communication based on the LTE(D) (none).

As the example of the determination method, it has been described in the present example that the determination is performed using the information of the AP name, the SSID, the Realm or the eNB, but the determination method is not limited thereto. It may be detected that the UEs are in proximity using the GPS information, and it may be determine whether or not the communication based on the LTE(D) can be performed or the communication based on the WLAN(D) can be performed.

A specific example in which the ProSe Server 90 detects the proximity UE of the UE 10 (S1504) will be described. When the UE 10 requests the detection of the proximity UE capable of performing the communication in the APP 4, the ProSe Server 90 detects the direct communication path that can be used by the UE based on the request from the UE 10 (S1502). As described above, detection means detects that the communication can be performed based on the LTE(D) in the APP 4 based on the detected direct communication path.

The UE located in proximity enough to perform the communication based on the detected usable communication path (LTE(D)) is extracted based on the Server contact list 942, the positional information management table 946 and the proximity evaluation policy 948. Specifically, the UE using the same LTE base station (eNB) as the positional information may be detected.

The detection of whether or not the UE notified as the proximity discovery unnecessary on the Server contact list 942 to the ProSe Server 90 is in proximity is not performed. For example, in the state in which the contact list of the APP 4 in Fig. 13 is updated, the proximity discovery unnecessary checkbox of the UE 10c is checked. Thus, the detection of whether or not the UE 10 is in the proximity of the UE 10c is not performed.

In this case, since the communication path that can be used in the APP 4 is the communication based on the LTE(D), it is not necessary to determine whether or not there is the UE in proximity enough to perform the communication based on the WLAN(D).

In so doing, the ProSe Server 90 can detect that the usable communication path that can be used by the UE 10 in the APP 4 is the communication based on the LTE(D) and can detect the UE in proximity enough to perform the communication based on the LTE(D). The detected UE may be plural in number. As in the APP 4, the ProSe Server 90 can detect that the usable communication path for the APP 1 is the communication based on the LTE(D) and can detect the UE in proximity enough to perform the communication based on the LTE(D).

In the APP 4, the UE 10 can perform the communication via a macro with the UE (for example, UEm) that is not able to use the direct communication of the LTE(D). Meanwhile, in the APP 1, the UE 10 is not able to perform the communication with the UE (for example, UEn) that is not able to perform the direct communication of the LTE(D).

Next, a specific example in which the ProSe Server 90 detects the proximity UE of the UE 10 when the UE 10 requests the detection of the proximity UE capable of performing the communication in the APP 5 (S1504) will be described. The ProSe Server detects the direct communication path that can be used by the UE 10 based on the request from the UE 10 (S1502). As described above, detection means detects that it is possible to perform the communication based on the WLAN(D) in the APP 5 based on the detected communication path.

The UE in proximity enough to perform the communication based on the detected usable communication path (WLAN(D)) is extracted based on the Server contact list 942, the positional information management table 946 and the proximity evaluation policy 948. Specifically, the UE using the same WLAN base station as the positional information may be detected.

The detection of whether or not the UE notified as the proximity discovery unnecessary on the Server contact list 942 to the ProSe Server 90 is in proximity is not performed.

In this case, since the communication path that can be used in the APP 5 is the communication based on the WLAN(D), it is not necessary to determine whether or not there is the UE in proximity enough to perform the communication based on the LTE(D).

In so doing, the ProSe Server 90 can detect that the communication path which can be used by the UE 10 in the APP 2 is the communication based on the WLAN(D), and can detect the UE in proximity enough to perform the communication based on the WLAN(D). The detected UE may be plural in number. Similarly to the APP 5, the ProSe Server 90 can detect that the usable communication path for the APP 2 is the communication based on the WLAN(D) and the UE in proximity enough to perform the communication based on the WLAN(D).

In the APP 5, the UE 10 can perform the communication via a macro with the UE that is not able to use the direct communication of the WLAN(D). Meanwhile, in the APP 2, the UE 10 is not able to perform the communication with the UE that is not able to use the direct communication of the WLAN(D).

Next, a specific example in which the ProSe Server 90 detects the proximity UE of the UE 10 when the UE 10 requests the detection of the proximity UE capable of performing the communication in the APP 6 (S1504) will be described. The ProSe Server 90 detects the direct communication path that can be used by the UE based on the request from the UE 10 (S1502). As described above, detection means detects that the communication is performed based on the LTE(D) and the communication is performed based on the WLAN(D) in the APP 6.

The UE in proximity enough to perform the communication based on the detected usable communication path is extracted based on the Server contact list 942, the positional information management table 946 and the proximity evaluation policy 948. When the usable communication path is plural in number, for example, when the communication based on the LTE(D) is performed and the communication based on the WLAN(D) is performed, it is determined whether or not the respective UEs of the Server contact list 942 are in proximity enough to perform the communication based on the LTE(D), these UEs are in proximity enough to perform the communication based on the WLAN(D), these UEs in proximity enough to perform the communication based on the communication in both the LTE(D) and the WLAN(D), or these UEs are separated at a distance enough not to perform the communication in both the LTE(D) and the WLAN(D). As described above, determination means may perform the detection based on the positional information of the UEs.

The detection of whether or not the UE notified as the proximity discovery unnecessary on the Server contact list 942 to the ProSe Server 90 is in proximity is not performed. For example, in the state in which the contact list of the APP 4 in Fig. 13 is updated, the proximity discovery unnecessary check box of the UE 10c is checked. For this reason, it is not detected whether or not the UE 10c is in the proximity of the UE 10.

In so doing, the ProSe Server 90 can detect the proximity UE communicating with the UE 10 through the APP 3, and the communication path that can be used for the proximity UE. The detected UE may be plural in number. The usable direct communication path detected based on the positional information may be different for each proximity UE.

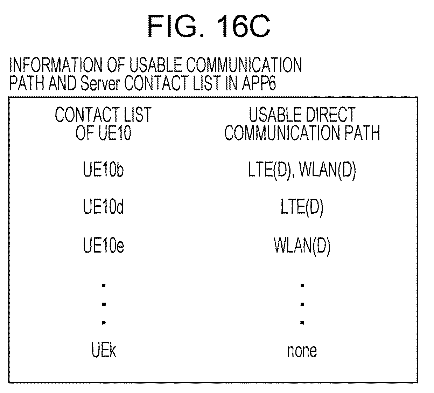

For example, as shown in Fig. 16C, only the communication based on the LTE(D) can be used for the UE 10b, only the communication based on the WLAN(D) can be used for the UE 10d, and both the communication based on both the LTE(D) and the WLAN(D) can be used for the UE 10a. Similarly to the APP 6, in the case of the APP 3, the ProSe Server 90 can detect the proximity UE that performs the communication by the APP 3 and the usable communication path that can be use by the proximity UE.

In the APP 6, the UE 10 can perform the communication via a macro with the UE (for example, UEk) that is not able to use the direct communication of the WLAN(D). Meanwhile, in the APP 3, the UE 10 is not able to perform the communication with the UE that is not able to the direct communication of the WLAN(D).

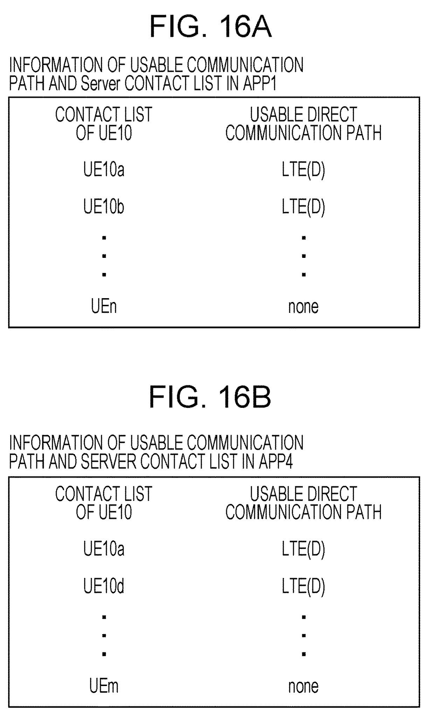

Referring back to Fig. 14, the ProSe Server 90 that completes the evaluation within the Server contact list 942 of the UE 10 in S1410 notifies of the UE 10 capable of performing the communication which is managed for each application, the proximity UE and the information regarding the usable communication path (S1412). For example, as shown in Figs. 16A to 16C, the Server contact list 942 and the usable communication path are transmitted to the UE 10. As shown in Figs. 16A, 16B and 16C, the notification information transmitted to the UE 10 may be notified for each application. Here, in the examples of Figs. 16A to 16C, Fig. 16A shows the notification information regarding the APP 1, Fig. 16B shows the notification information regarding the APP 4, and Fig. 16C shows the notification information regarding the APP 6.

Here, in the example of the APP 1 shown in Fig. 16A, the proximity UE and the usable direct communication path may be notified in correlation with each other, as the proximity evaluation result. Specifically, the UE 10a may be notified as being in proximity enough to establish the direct communication path based on the LTE(D). The usable direct communication path (LTE(D)) for a certain UE may be included in the notification, as the proximity evaluation result.

In addition to the information regarding the UE located in proximity, information regarding the UE that is not located in proximity may be notified. For example, in the case of the APP 1, the UE 10 may be notified that there is not the direct communication path that can be used for the UE (UEm) that is not positioned in proximity enough to use the direct communication path of the LTE(D) (none).

When it is not able to establish the communication path that can be used for the communication based on the APP list 142 with the UE that is not located in proximity enough to establish the direct communication path, the UE 10 may determine that the UE 10 is not able to communicate with the UEm through the APP 1 at that time.

In the example of the APP 1, based on the APP list 142, it may be detected that the permitted communication path is only the LTE(D), and it may be determined that the UE 10 is not able to establish the communication path that can be used for the communication with the UE that is not positioned in proximity. The UE 10 may determine that it is not able to communicate with the UEm through the APP 1 at that time. Here, in the example of the APP 4 shown in Fig. 16B, the proximity UE and the usable communication path may be notified in correlation with each other as the proximity evaluation result, similarly to the APP 1. Specifically, it may be notified that the UE 10a is in proximity enough to establish the direct communication path based on the LTE(D). The usable communication path (LTE(D)) for only a certain UE may be included in the notification as the proximity detection result.

In addition to the information regarding the UE located in proximity, the information regarding the UE that is not located in proximity may be notified. For example, in the case of the APP 4, the UE 10 may be notified that there is not the direct communication path that can be used for the UE (UEm) that is not located in proximity enough to use the direct communication path of the LTE(D) (none). For example, when it is not able to use the direct communication path of the LTE(D) in the APP 4, it may be notified that the UE 10 does not have the direct communication path that can be used for the UE (UEm) that is not located in proximity (none). Alternatively, the UE 10 may be notified that there it is not use the direct communication path and it is possible to use the communication path via a macro.

The UE 10 may detect that it is not able to establish the direct communication path with the UE that is not located in proximity enough to establish the direct communication path and it is possible to perform the communication using the communication path via a macro, based on the APP list 142.

In the example of the APP 4, the UE 10 may detect that the permitted communication path is the LTE(D) and the communication path via a macro based on the APP list 142, and may determine that it is possible to perform communication by establishing the communication path via a macro with the UE that is not located in proximity.

Here, in the example of the APP 6 shown in Fig. 16C, the proximity UE and the usable direct communication path may be notified in correlation with each other as the proximity evaluation result, similarly to the APP 1. When the plurality of direct communication paths is permitted for the application as in the APP 6, information of a plurality of usable direct communication paths may be transmitted to the UE 10a depending on the proximity degree. For example, the UE 10 may be notified that the UE 10b is in proximity enough to establish the direct communication path based on the LTE(D) and the WLAN(D). The UE 10 may be notified that the UE 10d is in proximity enough to establish the direct communication path based on the LTE(D). The UE 10 may be notified that the UE 10e is in proximity enough to establish the direct communication path based on the WLAN(D).

The usable direct communication path for only a certain proximity UE may be included in the notification as the proximity evaluation result.

In addition to the information regarding the UE located in proximity, the information regarding the UE that is not located in proximity may be notified. For example, in the case of the APP 6, the UE 10 may be notified that there is not the direct communication path that can be used for the UE (UEm) that is not located in proximity enough to use the direct communication paths of the LTE(D) and the WLAN(D) (none). Alternatively, the UE 10 may be notified that there is not have the usable direct communication path and it is possible to use the communication path via a macro.

The UE 10 may detect that it is not able to establish the direct communication path with the UE that is not located in proximity enough to establish the direct communication path and it is possible to perform the communication using the communication path via a macro, based on the APP list 142.

In the example of the APP 6, the UE 10 may detect that the permitted communication path is the LTE(D) and the communication path via a macro, and may determine that it is possible to perform the communication by establishing the communication path via a macro with the UE that is not located in proximity, based on the APP list 142.

In the APP 2, the APP 3 and the APP 5, the information regarding the proximity UE and the information regarding the contactable UE, and the information regarding the usable communication path may be notified using the same method.

Through the above procedure, the UE 10 can detect the UE capable of using the direct communication (LTE(D) or WLAN(D)) from the Server contact list 942, and can determine to perform the proximity discovery. The proximity detection in the ProSe Server 90 can be performed based on the request for the detection of the proximity terminal of the UE 10, and can obtain the detection result as the UE 10. Means for requesting the detection of the proximity terminal of the UE 10 may perform the request for the detection of the proximity terminal by requesting the registration of the positional information, or means for transmitting a message indicating the request for the detection of the proximity terminal to the ProSe Server 90, other than the request for the registration of the positional information may be used.

As stated above, since the procedure of establishing the direct communication path is performed by detecting that there is the UE in proximity enough to perform the direct communication, the procedure of establishing the direct communication path that is unnecessarily performed even though it is not able to perform the direct communication with the UE is not performed. Thus, it is possible to suppress an unnecessary procedure, an unnecessary terminal discovery process, and a resource regarding terminal discovery.

### [1.3.4 communication Path Establishment Procedure]

### [1.3.4.1 Communication Path Establishment Procedure 1]

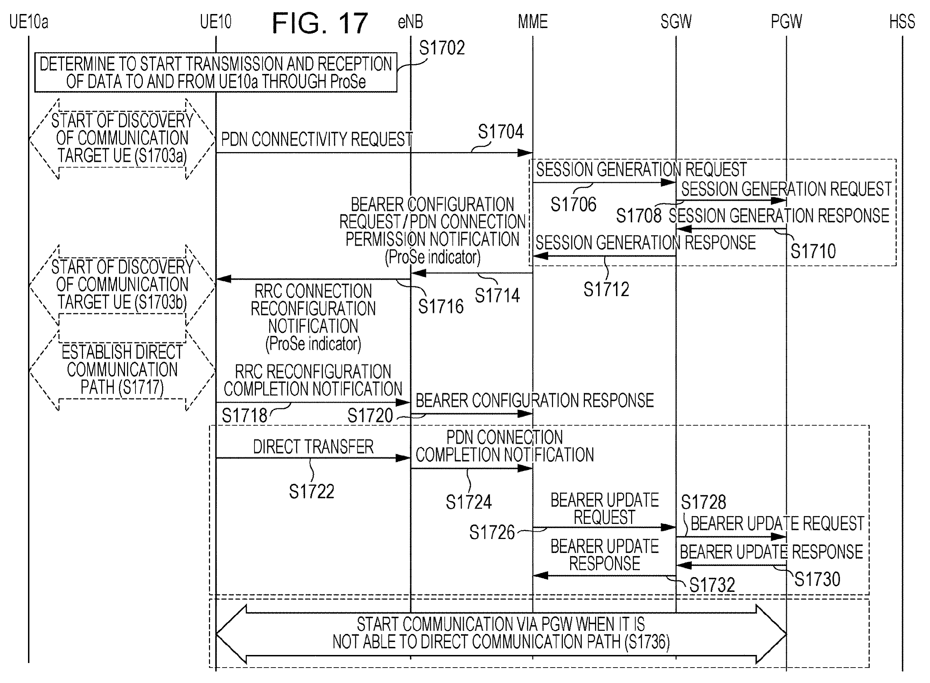

Next, a procedure until the transmission and reception of data through the direct communication or the communication via a macro is started after the proximity discovery is performed on the UE capable of performing the direct communication will be described. Hereinafter, an example in which the UE 10 performs communication using the APP 4 as the application will be mainly described. The UE 10 detects the UE positioned in proximity enough to perform the communication using the APP 4 as described above. The information regarding the usable direct communication path is obtained. In the present example, a procedure in a state in which the UE 10 detects the UE 10a as the UE positioned in proximity based on the notification from the ProSe Server 90 and detects that the usable communication path is the communication path based on the LTE(D) will be described with reference to Fig. 17. Here, since the APP 4 is associated with the Cat. 4, it is possible to use the communication path via a macro in addition to the direct communication path of the LTE(D). When it is not able to use the direct communication path of the LTE(D), it is possible to use the communication path via a macro.

When an application to be used is the APP 5, since the APP 5 is associated with the Cat. 5, it is possible to use the communication path via a macro in addition to the direct communication path of the WLAN(D). When it is not able to use the direct communication path of the WLAN(D), it is possible to use the communication path via a macro.

When an application to be used is the APP 6, since the APP 6 is associated with the Cat. 6, it is possible to use the communication path via a macro in addition to the direct communication paths of the LTE(D) and the WLAN(D). When it is not able to use the direct paths of the LTE(D) and the WLAN(D), it is possible to use the communication path via a macro.

The UE 10 determines to start the communication with the UE 10a in the APP 4. This determination may be performed by selecting the UE 10a of the terminals in the proximity of the UE 10 by the user and determining to start the communication, based on the information of the proximity UE notified by the ProSe Server 90.

The UE 10 may start the discovery of the communication target UE before the communication path based on the LTE(D) with the UE 10a is established (S1703a). The discovery of the UE is actually performed by checking whether or not the communication path based on the LTE(D) with the UE 10a can be established.

Even though the ProSe Server 90 notifies that the UE 10 is in proximity enough to establish the communication path based on the LTE(D) with the UE 10a, since it is not apparent that the communication path can be actually established, the UE may be discovered.

Specifically, the discovery of the proximity terminal is performed by transmitting broadcast information based on the frequency used in the LTE wireless access method to a proximity area, and the proximity terminal sends a response to the discovery of the proximity terminal. Among the responses from the proximity terminals which are received by the UE 10, it may be detected that UE 10a is in proximity by detecting the response from the UE 10a.

The UE 10 establishes the communication path based on the LTE(D) with the UE 10a based on the approval of the communication provider. As a method of requesting the approval of the communication provider, the UE 10 may transmit a PDN connectivity request to the MME 40 based on a UE requested PDN connectivity procedure (S1704). Here, the UE 10 transmits the PDN connectivity request including the APN. The PDN connectivity request is a request transmitted to the MME 40 from the UE 10 in order to establish the PDN connection.

The UE 10 retains the APN correlated with the usable direct communication path and the usable direct communication path via a macro, and when the usable direct communication path of the APP 4 is the LTE(D) and the communication path via a macro and the UE 10 requests the approval for the establishment of the direct communication path of the LTE(D) and the establishment of the communication path via a macro, the APN correlated with the LTE(D) and the communication path via a macro may be selected.

The APN managed in correlation with the direct communication path may be plural in umber. For example, a plurality of different APNs such as an APN 5 correlated with the WLAN(D) and the communication via a macro, and an APN 6 correlated with the communication via a macro and a plurality of direct communication paths such as the LTE(D) and the WLAN(D) and the communication via a macro may be managed.

This means that the APN is managed in correlation with the permission information for the establishment of the communication path via a macro and the establishment of the direct communication path. A plurality of different APNs such as an APN 4 correlated with the communication via a macro and the LTE(D), an APN 5 correlated with the communication via a macro and the WLAN(D), and an APN 6 correlated with the communication via a macro and a plurality of direct communication paths such as the LTE(D) and the WLAN(D) and the communication via a macro may be managed.

For example, the APN may be managed such that the LTE(D) is permitted in the APN 1, the WLAN(D) is permitted in the APN 2, and only the direct communication paths of the LTE(D) and the WLAN(D) are permitted in the APN 3.

The UE 10 may retain an APN other than the APN which permits the establishment of the direct communication path, such as an APN 7 which does not permit the establishment of the direct communication path.

In order to request the permission for the establishment of the communication path via a macro and the direct communication path of the LTE(D) from the MME 40, the UE 10 selects the APN which permits the establishment of the communication path based on the LTE(D) and the establishment of the communication path via a macro, among the plurality of APNs, and adds the selected APN to the PDN connectivity request. Although it has been described in the above example that the UE 10 can select the APN 4 or the APN 6, the UE 10 may select the APN based on the correlation information by managing the application in correlation with the APN, for example, by using the APN 4 for the APP 4. Alternatively the APN may be arbitrarily selected.

In the discovery of the communication target UE, the resolution of the IP address of the UE 10a may be performed. In order to perform the resolution of the IP address, the IP address of the UE 10a may be simultaneously included when the UE 10 receives a response from the UE 10a.

When the PDN connectivity request is transmitted to the MME 40 (S1704), the UE 10 adds the APN correlated with the usable communication path in the UE 10a notified in the Server contact list 942 to the PDN connectivity request. Here, since the direct communication of the LTE(D) is permitted and the application supports the transmission and reception via the macro, the APN 4 is selected, and the APN 4 is included.

The APN which permits the establishment of the communication path via a macro and the WLAN(D) may be used in any type of application. When both the LTE(D) and the WLAN(D) and the communication path via a macro can be used, the UE 10 may arbitrarily determine to select the APN, or may determine the APN by using the notification from the network.

Next, the MME 40 receives the PDN connectivity request transmitted from the UE 10, and checks the APN included in the PDN connection. The checking of the APN is performed by determining that the received APN is the APN which permits the LTE(D) and the communication via a macro based on the permission information 442 for the establishment of the communication path. Thus, the MME 40 detects that the UE 10 requests the permission for the establishment of the direct communication path based on the LTE(D) and the establishment of the communication path via a macro.

The MME 40 manages the APN that can be used for each UE, and determines whether or not the UE 10 can use the APN notified from the UE 10. When the UE 10 can use the APN, the MME 40 permits the establishment of the communication path via a macro and the establishment of the communication path correlated with the establishment of the direct communication path correlated with the APN, and does not permit the when the UE 10 is not able to use the APN.

Through the above procedure, the MME 40 can determine to permit the establishment of the direct communication path based on the LTE(D) and the establishment of the communication path via a macro of the UE 10.

When the MME 40 determines to permit, the MME 40 transmits a bearer configuration request/PDN connection permission notification to the eNB 45 (S1714), and the eNB 45 transmits a RRC connection reconfiguration notification to the UE 10 based on the bearer configuration request/PDN connection permission notification (S1716). Thus, the MME 40 notifies the UE 10 that it is determined to permit the establishment of the direct communication path based on the LTE(D) and the establishment of the communication path via a macro.

Here, the bearer configuration request/PDN connection permission notification and the RRC reconfiguration notification may be transmitted by including information indicating whether or not the establishment of the direct communication path is permitted, and information indicating whether or not the establishment of the communication path via a macro is permitted.

The information indicating whether or not the establishment of the direct communication path is permitted may be notified by including a flag such as ProSe Indicator which explicitly indicates that the communication path establishment of the direct communication path is permitted. Alternatively, the information indicating whether or not the establishment of the direct communication path is permitted may be notified by including information correlated with the communication path via a macro such as a bearer ID correlated with the direct communication path, and an IP address used for the communication using the direct communication path.

The information indicating whether or not the establishment of the direct communication path is permitted may be implicitly notified without including a flag such as ProSe Indicator which explicitly indicates that the communication path establishment of the direct communication path is permitted. Alternatively, the information indicating whether or not the establishment of the direct communication path is permitted may be notified by including information correlated with the communication path via a macro a bearer ID correlated with the communication path via a macro and an IP address used for the communication using the communication path via a macro. Alternatively, the information indicating whether or not the establishment of the direct communication path is permitted may be notified by including a flag different from the ProSe Indicator which explicitly indicates that the communication path establishment of the direct communication path is permitted.

Thus, the MME 40 can notify that the establishment of the direct communication path is permitted and the establishment of the communication path via a macro is permitted, can notify that the establishment of only the direct communication path is permitted, and can notify that the establishment of only the communication path via a macro is permitted.

The notification may be performed using different flags such as a flag 1 indicating whether or not the establishment of the direct communication path and the communication path via a macro is permitted, a flag 2 indicating whether or not only the establishment of the direct communication path is permitted, and a flag 3 indicating whether or not the establishment of the communication path via a macro is permitted.

The notification is not limited thereto, but information indicating whether or not the establishment of the direct communication path is permitted and information indicating whether or not the establishment of the communication path via a macro is permitted may be constituted by combining other information elements, and the configured information may be notified.

The MME 40 determines to generate a session executed in the SGW 35 and PGW 30 based on whether or not the establishment of the communication path via a macro is permitted. For example, in the example in which the APN 4 is included in the PDN connectivity request as described above, it is determined to establish the direct communication path and the communication path via a macro, and the session is generated in order to the communication path via a macro.

Here, when the APN 1 is included in the PDN connectivity request, since it is determined to establish only the direct communication path and the communication path via a macro is not established, the session may not be generated.

When the APN 7 is included in the PDN connectivity request, it is determined to establish the communication path via a macro, and the session is generated in order to establish the communication path via a macro.

As mentioned above, it may be determined whether or not to generate the session executed in the SGW 35 and the PGW 30 based on the APN.

When it is determined to generate the session, a session generation request (S1706) transmitted from the MME 40 to the SGW 35, a session generation request (S1708) transmitted from the SGW 35 to the PGW 30, a session generation response (S1710) transmitted from the PGW 30 to the SGW 35, and a session generation response (S1712) transmitted from the SGW 35 to the MME 40 as responses to these requests are transmitted and received.

As stated above, the MME 40 generates the session within the core network depending on the APN that grants the permission, that is, establishes the communication path such as the PDN connection.

The eNB 45 receives the bearer configuration request/PDN connection permission notification from the MME 40, and detects the permitted communication path based on the information indicating whether or not the establishment of the direct communication path included in the notification is permitted and the information indicating whether or not the establishment of the communication path via a macro is permitted.

Here, when the eNB 45 detects that the communication path establishment of the communication path via a macro is permitted based on the information indicating whether or not the establishment of the communication path via a macro is permitted, the UE 10 may allocate a radio resource for performing wireless communication with the eNB 45. For example, when the UE 10 requests the establishment of the PDN connection including the APN 4, it may be detected that the establishment requested from the UE 10 may be the establishment of the direct communication path and the establishment of the communication path via a macro and the establishment is permitted by the MME 40, and the establishment of the wireless communication path such as the allocation of the radio resource between the eNB 45 and the UE 10 may be performed based on the detection.

When the eNB 45 detects that only the establishment of the direct communication path is permitted based on the information indicating whether or not the establishment of the direct communication path is permitted and the information indicating whether or not the establishment of the communication path via a macro is permitted, the UE 10 may not allocate the radio resource for performing the wireless communication with the eNB 45. The detection may be performed by detecting that the ProSe Indicator is not included in the notification.

Thereafter, the eNB 45 transmits the RRC connection reconfiguration notification to the UE 10, and notifies of permission information in response to the connection establishment request transmitted from the UE 10. The notification may be transmitted by including the information indicating whether or not the establishment of the direct communication path is permitted and the information indicating whether or not the establishment of the communication path via a macro is permitted, which are received from the MME 40.

Subsequently, the UE 10 receives the RRC connection reconfiguration notification from the eNB 45, and detects whether or not the establishment of the direct communication path and the communication path via a macro is permitted, whether or not only the establishment of the direct communication path is permitted, whether or not only the establishment of the communication path via a macro is permitted, based on the information indicating whether or not the establishment of the direct communication path is permitted, and the information indicating whether or not the establishment of the communication path via a macro is permitted which are included in the notification and are transmitted from the MME 40. Here, as the method of detecting that the establishment of the communication path based on the LTE(D) and the communication path via a macro is permitted, the detection may be performed by detecting that the ProSe Indicator is included.

The MME 40 may notify the UE 10 of the bearer configuration request/PDN connection permission notification and the RRC connection reconfiguration notification including the information used by the UE 10 in order to establish the direct communication path, such as the information regarding the bearer ID or the IP address used by the UE 10 in order to perform the communication using the direct communication path or a frequency used for the direct communication. The bearer ID correlated with the direct communication path may be allocated by the eNB 45, and the RRC connection reconfiguration notification including the bearer ID may be notified to the UE 10.

The MME 40 may notify the UE 10 of the bearer configuration request/PDN connection permission notification and the RRC connection reconfiguration notification including the information used by the UE 10 in order to establish the communication path via a macro, such as the information regarding the bearer ID or the IP address used by the UE 10 in order to perform the communication using the communication path via a macro or a frequency used for the communication via a macro. The bearer ID correlated with the direct communication path may be allocated by the eNB 45, and may be included in the RRC connection reconfiguration notification, and the RRC connection reconfiguration notification including the bearer ID may be notified to the UE 10.

Although it has been described that the UE 10 starts the discovery of the communication target UE before the PDN connectivity request is transmitted (S1703a), the discovery may be started after the RRC connection reconfiguration notification is received (S1703b).

When the establishment of the direct communication path is permitted by the MME 40 based on the information indicating whether or not the establishment of the direct communication path is permitted, the UE 10 may establish the direct communication path with the UE 10a (S1717). When the direct communication path establishment is not permitted, the establishment of the direct communication path may not be performed. The UE 10 may determine whether or not to establish the direct communication path based on the direct communication path permitted by the MME 40, and the communication path correlated with the APP. Alternatively, the UE 10 may determine whether or not to establish the direct communication path based on any one of the direct communication path permitted by the MME 40, and the information regarding the communication path correlated with the APP.

For example, when the direct communication path correlated with the APP 4 is the LTE(D) and the communication via a macro and the APN permitted by the MME permits the establishment of both the LTE(D) and the WLAN(D) and the communication path via a macro, since the LTE(D) and the communication via a macro are correlated with the APP 4 and the LTE(D) and the communication via a macro are permitted by the APN, the UE 10 determines to establish the direct communication path of the LTE(D) or the communication path via a macro.

In the establishment procedure of the direct communication path based on the LTE(D) with the UE 10a, the UE 10 may establish the direct communication path using the frequency included in the information regarding the establishment of the direct communication path obtained from the RRC connection reconfiguration notification, or may establish the direct communication path by previously allocating a frequency to be used.

Here, the IP address or the bearer ID included in the information regarding the establishment of the direct communication path obtained from the RRC connection reconfiguration notification may be notified to the UE 10a, the notified IP address or bearer ID may be managed in correlation with the direct communication path, and the correlated IP address or bearer ID may be used at the time of performing the direct communication. At the time of establishing the direct communication path with the UE 10a, any one of the UE 10 and the UE 10a may allocate the IP address or the bearer ID and may notify the other one of the IP address or bearer ID, and the other one may obtain the notified IP address or bearer ID, may manage the obtained IP address or bearer ID in correlation with the direct communication path, and may use the IP address or bearer ID at the time of performing the direct communication.

As discussed above, the UE 10 and the UE 10a can start the communication by establishing the direct communication path. When the communication path based on the LTE(D) is established for the communication of the APP 4, the UE 10 selects the direct communication path in order to transmit communication data of the APP 4, and transmits the communication data of the APP 4. More specifically, at the time of transmitting user data of the APN 4, the correlated IP address may be selected, and the communication may be performed. The correlated bearer ID may be selected, the communication path may be specified, and the communication may be performed.

The UE 10 in which the establishment of the communication path of the LTE(D) with the UE 10a is completed transmits a RRC reconfiguration completion notification to the eNB 45 in order to notify that the establishment of the direct communication path is completed (S1718). The eNB 45 may transmit the bearer configuration response to the MME 40 by checking that the UE 10 and the UE 10a establish the direct communication path of the LTE(D), and may notify the MME 40 that the establishment of the direct communication path is completed (S1720).

Subsequently, the UE 10 determines to establish the communication path via a macro based on the information indicating whether or not establishment of the communication path via a macro is permitted. In the establishment procedure of the communication path via a macro, the UE 10 may establish the communication path using the frequency obtained from the RRC connection reconfiguration notification, or may establish the communication path by previously allocating a frequency to be used

Here, the IP address or the bearer ID obtained from the RRC connection reconfiguration notification may be notified to the UE 10a, the notified IP address or bearer ID may be managed in correlation with the communication path via macro, and the correlated IP address or bearer ID may be used at the time of performing the communication path via a macro.

When the establishment of the communication path via a macro is permitted based on the information indicating whether or not the establishment of the communication path via a macro is permitted, the UE 10 may transmit a direct transfer message to the eNB 45 (S1722). The eNB 45 may transmit the PDN connection completion notification to the MME 40 based on the reception of the direct transfer message (S1724).

As stated above, the UE 10 notifies the MME 40 that the establishment of the communication path via a macro is performed by transmitting the direct transfer message and the PDN connection completion notification.

Here, when the PDN connection between the PGW 30 and the UE 10 is established as the communication path via a macro, the MME 40 performs the procedure with respect to the SGW 35 and the PGW 30 after the bearer configuration response or the PDN connection completion notification is received, and updates the bearer configuration. Specifically, the MME 40 transmits a bearer update request to the SGW 35 (S1726), and the SGW 35 transmits the bearer update request to the PGW 30 based on the reception (S1728). The PGW 30 transmits a bearer update response to the SGW 35 as a response (S1730), and the SGW 35 transmits the bearer update response to the MME 40 based on the reception (S1732). Through the above procedure, bearer information is updated in each device.

As mentioned above, the UE 10 can establish the communication path via a macro and the direct communication path with the UE 10a by requesting the establishment of the PDN connection using the APN 4 to the APN 6. The UE 10 can establish the direct communication path with the UE 10a by requesting the establishment of the PDN connection using the APN 1 to the APN 3. The UE 10 can establish the communication path via a macro by requesting the establishment of the PDN connection using the APN 7.

Through the above procedure, the UE 10 that performs the communication in the APP 4 can establish the direct communication path of the LTE(D) and the communication path via a macro. Here, the UE 10 notifies the PDN connectivity request including the APN 4 that permits the LTE(D) and the communication path via a macro, and thus, the UE 10 can establish the LTE(D) and the communication path via a macro.

The UE 10 notifies the PDN connectivity request including the APN 5 that permits the WLAN(D) and the communication path via a macro, and thus, the UE 10 can establish the WLAN(D) and the communication path via a macro.

The UE 10 notifies the PDN connectivity request including the APN 6 that permits the LTE(D), the WLAN(D) and the communication path via a macro, and thus, the UE 10 can establish the LTE(D), the WLAN(D) and the communication path via a macro.

Here, when the communication paths of the LTE(D) and the WLAN(D) can be established as in the APN 6, the UE 10 may arbitrarily select the communication paths of the LTE(D) and the WLAN(D). The UE 10 may select the communication paths of the LTE(D) and the WLAN(D) by using the notification from the network.

Here, the UE 10 can transmit and receive data by using the communication path via a macro and the direct communication path with the UE 10a. Here, the UE 10 may select any one of the communication path via a macro and the direct communication path with the UE 10a. The UE 10 may manage a priority for selecting the direct communication path and the communication path via a macro, and may select the communication path via a macro or the direct communication path based on the priority.

For example, when the direct communication path of the LTE(D) and the communication path via a macro can be used as in the APP 4, the priority of the direct communication path of the LTE(D) and the communication path via a macro may be managed. Here, the priority of the direct communication path of the LTE(D) and the communication path via a macro may be managed in correlation with the PDN connection of the direct communication path of the LTE(D) and the PDN connection of the communication path via a macro. The priority of the direct communication path of the LTE(D) and the communication path via a macro may be managed in correlation with the bearer of the direct communication path of the LTE(D) and the bearer of the communication path via a macro.

When the direct communication path of the WLAN(D) and the communication path via a macro can be used as in the APP 5, the priority of the direct communication path of the WLAN(D) and the communication path via a macro may be managed. Here, the priority of the direct communication path of the WLAN(D) and the communication path via a macro may be managed in correlation with the PDN connection of the direct communication path of the WLAN(D) and the PDN connection of the communication path via a macro. The priority of the direct communication path of the WLAN(D) and the communication path via a macro may be managed in correlation with the bearer of the direct communication path of the WLAN(D) and the bearer of the communication path via a macro.

When the direct communication paths of the LTE(D) and the WLAN(D) and the communication path via a macro can be used as in the APP 6, the priority of the direct communication paths of the LTE(D) and the WLAN(D) and the communication path via a macro may be managed. Here, the priority of the direct communication paths of the LTE(D) and the WLAN(D) and the communication path via a macro may be managed in correlation with the PDN connection of the direct communication path of the LTE(D), the PDN connection of the direct communication path of the WLAN(D) and the PDN connection of the communication path via a macro. The priority of the direct communication path of the LTE(D), the direct communication path of the WLAN(D) and the communication path via a macro may be managed in correlation with the bearer of the direct communication path of the LTE(D), the bearer of the direct communication path of the WLAN(D) and the bearer of the communication path via a macro.

Here, when the UE 10 establishes the communication path via a macro as in the APN 4 to the APN 6 and is not able to maintain the direct communication with the UE 10a, the UE 10 may start the communication via a macro. That is, when the UE 10 is not able to start the direct communication of the LTE(D) with the UE 10a, the UE 10 starts the communication via a macro (PGW 30) (S1736).

Here, the PDN connection of the communication path via a macro through the APN 4 and the PDN connection of the communication path of the LTE(D) through the APN 4 may be managed. Since the UE 10 is not in proximity enough to perform the LTE(D) with the UE 10a, the UE 10 may perform the communication by selecting the PDN connection of the direct communication path via a macro through the APN 4 and the UE 10a.

Through the above procedure, the UE 10 can start the direct communication of the LTE(D) or the communication via a macro with the UE 10a.

Although it has been described in the present example that the establishment of the communication path is performed when the UE 10 starts the direct communication with the UE 10a by transmitting the PDN connectivity request by the UE 10, the present embodiment is not limited thereto, but the establishment of the communication path may be previously performed. For example, the UE 10 obtains the permission for the direct communication path based on the fact that the PDN connectivity request for the establishment of the direct communication path of the LTE(D) and the communication path via a macro is previously transmitted when the terminal is started or the application is started, the UE 10 may determine that the UE 10a is in proximity enough to perform the direct communication, and may immediately establish the direct communication path when it is determined to start the direct communication (S1717).

Although it has been described in the above example that the communication path via a macro and the direct communication path based on the LTE(D) in order to perform the communication through the APP 4 is established and the communication is started, the UE 10 can apply the aforementioned method to the communication through the APP 5 and the communication through the APP 6, as shown in Fig. 4A.

For example, when the communication of the APP 4 is performed, the UE 10 requests the permission for the establishment of the communication path via a macro and the communication path of the LTE(D) by selecting the APN which permits the LTE(D) and the communication via a macro and adding the selected APN to the PDN connectivity request.

The UE 10 receives whether or not the establishment of the communication path of the LTE(D) and the communication path via a macro is permitted, and establishes the direct communication path of the LTE(D) and the communication path via a macro when the communication path establishment is permitted.

When the MME 40 permits the establishment of the communication path based on the LTE(D) and the establishment of the communication path via a macro, information such as SSID for allowing the UE 10 and the UE 10a to perform the direct communication may be included.

When the communication of the APP 5 is performed, the UE 10 requests the establishment of the communication path via a macro and the communication path of the WLAN(D) by selecting the APN which permits the WLAN(D) and the communication via a macro and adding the selected APN to the PDN connectivity request.

The UE 10 receives whether or not the establishment of the communication path of the WLAN(D) and the communication path via a macro is permitted, and establishes the direct communication path of the WLAN(D) and the communication path via a macro when the communication path establishment is permitted.

When the MME 40 permits the establishment of the communication path based on the WLAN(D) and the communication path via a macro, information such as SSID for allowing the UE 10 and the UE 10a to perform the direct communication may be included.

When the communication of the APP 6 is performed, the PDN connectivity request including the APN which permits the LTE(D), the WLAN(D) and the communication via a macro may be transmitted. Alternatively, after it is determined to use the LTE(D), the APN which permits the LTE(D) and the communication via a macro may be selected, and the PDN connectivity request including the selected APN may be transmitted. Alternatively, after it is determined to use the WLAN(D), the APN which permits the WLAN(D) and the communication via a macro may be selected, and the PDN connectivity request including the selected APN may be transmitted.

As stated above, the UE 10 performs the establishment procedure after the permission for the establishment of the direct communication path correlated with the application is requested to the mobile communication provider. The permission request is performed based on the information correlated with the direct communication path.

Thus, for example, when there is a plurality of applications correlated with the LTE(D), the permission request may not be transmitted to the individual application.

For example, when the communication using the LTE(D) and the communication path via a macro is permitted at the time of starting the communication of the APP 4, if the communication using the LTE(D) and the communication path via a macro is performed by the application different from the APP 4, it is determined that the communication path establishment is already permitted, and the direct communication path and the communication path via a macro may be established.

In order to perform the communication through the APP 6, the UE 10 may transmit the PDN connectivity request including the APN which permits the LTE(D), the WLAN(D) and the communication via a macro, and may establish the communication channel with the UE by arbitrarily selecting the direct communication path of the LTE(D) or the direct communication path of the WLAN(D), or may establish the communication path via a macro when the establishment of the communication paths of both the LTE(D) and the WLAN(D) and the communication path in the communication via a macro is permitted.

In the UE 10a as the communication partner, the permission procedure based on the PDN connectivity request described above in order to obtain the permission of the communication provider at the time of establishing the direct communication path and the communication path via a macro may be performed.

Alternatively, the permission procedure based on the PDN connectivity request may be performed when the establishment of the direct communication path and the communication path via a macro is requested from the UE 10. That is, the completion of the permission procedure of the UE 10a as the communication partner at the time of establishing the direct communication path and the communication path via a macro between the UE 10 and the UE 10a may be one condition for establishing the direct communication path and the communication path via a macro.

When data of the application is transmitted and received, the UE 10 performs the communication by managing the direct communication path correlated with the application and the communication path via a macro and selecting the direct communication path or the communication path via a macro.

Here, the UE 10 may select the direct communication path of the LTE(D) in the state in which the direct communication path and the communication path via a macro using the APN which permits the establishment of the communication path via a macro and the direct communication path of the LTE(D), such as an APN 4.

In this case, the UE 10 may transmit and receive data by managing the application and the communication path in correlation with each other, managing the priority of the direct communication path of the LTE(D) and the communication path via a macro correlated with the specified application, and selecting the communication path of the LTE(D) and the communication path via a macro correlated with the specified application.

Thus, the UE 10 can transmit and receive the data of the application using the direct communication path of the LTE(D) and the communication path via a macro by selecting the direct communication path or the communication path using the communication path via a macro.

The UE 10 may retain the bearer ID correlated with the established direct communication path and the bearer ID correlated with the established communication path with the PGW 30, may manage the communication path in correlation with the beater ID, and may manage the priority between the bearer ID correlated with the direct communication path and the bearer ID correlated with the communication path via a macro.

Thus, the UE 10 can transmit and receive the bearer ID by selecting the bearer ID correlated with the direct communication path or the bearer ID correlated with the communication path with the macro.

The UE 10 may establish the PDN connection for performing the communication by using the established direct communication path, may establish the PDN connection for the performing the communication by using the communication path via a macro, may manage the communication path and the PDN connection in correlation with each other, and may manage the priority between the PDN connection of the direct communication path and the PDN connection of the communication path via a macro.

Thus, the UE 10 can transmit and receive the data of the application that performs the direct communication and the communication via a macro by selecting the PDN connection of the direct communication path or the PDN connection correlate with the communication path via a macro.

Here, it is necessary to specify the application corresponding to the data to be transmitted and received when the data is transmitted and received, and specifying means may specify the application based on IP5 tuple information such as a transmission source address, a transmission destination address, a protocol number, a transmission source port number, and a transmission destination port number. The application may be specified based on the identification information such as an application ID.

For example, when it is detected that the transmission data corresponds to the application such as APP 7 that performs the communication on the communication path via a macro, the transmission data is transmitted by selecting the communication path via a macro which is the communication path correlated with the application. When it is detected that the transmission data corresponds to the application such as the APP 1 capable of performing the communication using the LTE(D), the communication is performed by selecting the communication path based on the LTE(D) which is the communication path correlated with the application. When it is detected that the transmission data corresponds to the application such as the APP 4 capable of performing the communication using the communication path via a macro and the LTE(D), the communication is performed by selecting the LTE(D) or the communication path via a macro which is the communication path correlated with the application, but the communication is performed by selecting the communication path by the selection method based on the priority information described above.

### [1.3.4.2 Communication Path Establishment Procedure 2]

A method different from the method described in Communication Path Establishment Procedure 1 of 1.3.4.1 will be described as the procedure of performing the proximity discovery on the UE capable of performing the direct communication and starting to transmit and receive the data through the direct communication. In Communication Path Establishment Procedure 1 of 1.3.4.1, the procedure of requesting that the provider is to permit the establishment of the direct communication path of the UE is performed based on the UE requested PDN connectivity procedure. Meanwhile, in the present example, the procedure of requesting that the provider is to permit the establishment of the communication path of the UE is performed based on a service request procedure.

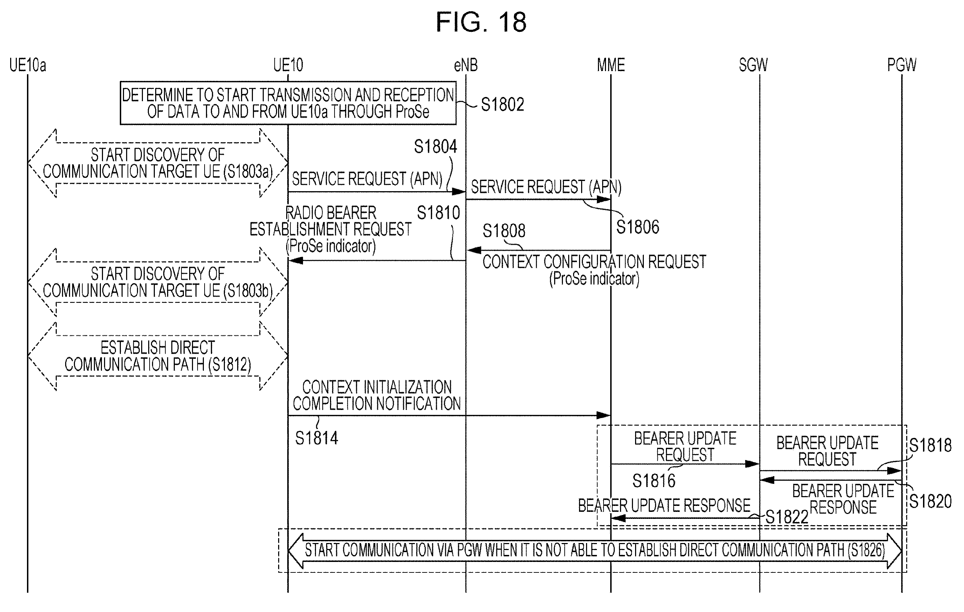

Communication Path Establishment Procedure 2 through the direct communication will be described with reference to Fig. 18. In the present example, the UE 10 performs the communication with the UE 10a by the APP 4. Here, the UE 10 detects the UE positioned in proximity enough to perform the communication using the APP 4 as described above. The information regarding the usable direct communication path is obtained. In the present example, a procedure starting from the state in which the UE 10 detects the UE 10a as the UE positioned in proximity based on the notification from the ProSe Server 90 and detects that the usable communication path is the communication path based on the LTE(D) will be described.

Initially, the UE 10 determines to start the transmission and reception of data to and from the UE 10a through the ProSe (S1802). Specifically, the determination method is the same as the method of (S1702) determining to start the transmission and reception of data to and from the UE 10a through the ProSe by the UE 10 in Communication Path Establishment Procedure 1 described with reference to Fig. 17, and the description thereof will be omitted.

The UE 10 may start the discovery of the communication target UE before the communication path via a macro and the communication path based on the LTE(D) with the UE 10a is established (S1803a). The specific method is the same as the method (S1702) of starting the discovery of the communication target UE in Communication Path Establishment Procedure 1 described with reference to Fig. 17, and thus, the description thereof will be omitted.

The UE 10 establishes the communication path via a macro and the communication path based on the LTE(D) with the UE 10a based on the approval of the communication provider. As a method of requesting the approval of the communication provider, the service request may be transmitted to the eNB 45 based on the service request procedure of the UE (s1804). Here, the UE 10 transmits the service request by adding the APN to the service request.

In the procedure described herein, the service request may be transmitted in order for the UE 10 and the UE 10a to change from a connection standby state (idle) to a connected state when the communication path established by the method described in Communication Path Establishment Procedure 1 of 1.3.4.1 is changed from the connected state to the connection standby state (idle). The UE 10 retains the APN correlated with the usable direct communication path, and when the usable communication path of the APP 4 is the LTE(D) and the communication path via a macro and the UE 10 requests the approval for the establishment of the direct communication path of the LTE(D) and the communication path via a macro, the APN correlated with the LTE(D) and the communication path via a macro is selected.

The APN managed in correlation with the direct communication path and the communication path via a macro may be plural in number. For example, a Plurality of different APNs such as an APN 4 correlated with the communication via a macro and the LTE(D), an APN 5 correlated with the communication via a macro and the WLAN(D), and an APN 6 correlated with the communication via a macro and the plurality of the direct communication path such as the LTE(D) and the WLAN(D) may be managed.

This means that the APN is managed in correlation with permission information for the establishment of the direct communication path and communication via a macro. For example, the APN is managed such that the LTE(D) and the communication via a macro are permitted in the APN 4, the WLAN(D) and the communication via a macro are permitted in the APN 5, and the direct communication paths of the LTE(D) and the WLAN(D) and the communication via a macro are permitted in the APN 6.

The UE 10 may retain an APN other than the APN which permits the establishment of the direct communication path, such as an APN 7 which does not permit the establishment of the direct communication path.

In order to request the permission for the establishment of the direct communication path of the LTE(D) and the communication path via a macro from the MME 40, the UE 10 selects the APN which permits the LTE(D) and the communication via a macro, among the plurality of APNs, and adds the selected APN to the service request. In the above example, the UE 10 can select the APN 4 or the APN 6. However, the UE may manage the application in correlation with the APN such that the APN 4 is used for the APP 4, and may select the APN based on the correlation information. Alternatively, the APN may be arbitrarily selected.

In the discovery of the communication target UE, the resolution of the IP address of the UE 10a may be performed. In order to perform the resolution of the IP address, the IP address of the UE 10a may be simultaneously included when the UE 10 receives a response from the UE 10a.

When the service request is transmitted to the eNB 45 (S1804), the UE 10 adds the APN corresponding to the usable communication path of the UE 10a notified in the Server contact list 942 to the service request. Here, since the direct communication of the LTE(D) and the communication via a macro are used, the UE 10 adds the APN 4 to the service request.

In any type of application, the direct communication path of the WLAN(D) and the communication path via a macro may be established. When both the direct communication paths of the LTE(D) and the WLAN(D) and the communication via a macro can be established, the UE 10 may arbitrarily determine the direct communication path, or may determine the direct communication path by using the notification from the network.

The eNB 45 receives the service request from the UE 10, and transmits the service request including the APN to the MME 40 (S1806). Accordingly, the UE 10 transmits the service request to the MME 40 through the eNB 45.

Here, when the communication path is already established in a case where the established communication path is changed to the connection standby state, the UE 10 may add information such as a bearer ID for specifying the communication path to the service request, and may transmit the service request including the information.

Subsequently, the MME 40 receives the service request transmitted from the eNB 45, and checks the included APN. The checking of the APN is performed by determining that the received APN is the APN which permits the LTE(D) and the communication via a macro based on the permission information 442 for the establishment of the communication path. Thus, the MME 40 detects that the UE 10 requests the permission for the establishment of the direct communication path based on the LTE(D) and the establishment of the communication path via a macro.

The MME 40 may detect the permission for the establishment of the direct communication path based on the LTE(D) and the establishment of the communication path via a macro based on the bearer ID included in the service request.

The MME 40 manages the APN that can be used for each UE, and determines whether or not the UE 10 can use the APN notified from the UE 10. When the UE 10 can use the APN, the MME permits the establishment of the communication path correlated with the establishment of the communication path via a macro and the establishment of the direct communication path correlated with the APN, and does not permit the communication path establishment when the UE 10 is not able to use the APN.

Through the above procedure, the MME 40 can determine to permit the establishment of the direct communication path based on the LTE(D) and the establishment of the communication path via a macro of the UE 10.

When the MME 40 determines to permit, the MME 40 transmits a context configuration request to the eNB 45 (S1808), and the eNB 45 transmits a radio bearer establishment request to the UE 10 based on the context configuration request (S1810). Thus, the MME 40 notifies the UE 10 that the establishment of the direct communication path based on the LTE(D) and the establishment of the communication path via a macro are permitted.

Here, the context configuration request and the radio bearer establishment request may be transmitted by including information indicating whether or not the establishment of the direct communication path is permitted and information indicating whether or not the establishment of the communication path via a macro is permitted.

The information indicating whether or not the establishment of the direct communication path is permitted may include a flag, such as ProSe Indicator, which explicitly indicates that the communication path establishment of the direct communication path is permitted. Alternatively, the information correlated with the communication path via a macro, such as a bearer ID correlated with the direct communication path or an IP address used for the communication using the direct communication path may be included.

The information indicating whether or not the establishment of the direct communication path is permitted may be implicitly notified without including a flag, such as ProSe Indicator, which explicitly indicates that the communication path establishment of the direct communication path is permitted. Alternatively, the information indicating whether or not the establishment of the direct communication path is permitted may be notified by including information correlated with the communication path via a macro, such as a bearer ID correlated with the communication path via a macro or an IP address used for the communication using the communication path via a macro. The information indicating whether or not the establishment of the direct communication path is permitted may be notified by including a flag different from the ProSe Indicator which explicitly indicates the communication path establishment of the direct communication path is permitted.

Thus, the MME 40 can notify that the establishment of the direct communication path is permitted and the establishment of the communication path via a macro is permitted, can notify that the establishment of only the direct communication path is permitted, and can notify that the establishment of only the communication path via a macro is permitted.

The MME 40 may perform the notification using different flags such as a flag 1 indicating whether or not the establishment of the direct communication path and the communication path via a macro is permitted, a flag 2 indicating whether or not only the establishment of the direct communication path is permitted, and a flag 3 indicating whether or not the establishment of the communication path via a macro is permitted.

The notification is not limited thereto, but the information indicating whether or not the establishment of the direct communication path is permitted and the information indicating whether or not the establishment of the communication path via a macro is permitted may be constituted by combining other information elements, and the constituted information may be notified.

The eNB 45 receives a bearer configuration request/PDN connection permission notification from the MME 40, and detects the communication path permitted based on the information indicating whether or not the establishment of the direct communication path is permitted and the information indicating whether or not the establishment of the communication path via a macro is permitted, which are included in the notification.

Here, when the eNB 45 detects that the communication path establishment of the communication path via a macro is permitted based on the information indicating whether or not the establishment of the communication path via a macro is permitted, the UE 10 may allocate a radio resource for performing the wireless communication with the eNB 45. For example, when the UE 10 transmits the establishment request of the PDN connection including the APN 4, the eNB 45 detects that the establishment requested from the UE 10 is the establishment of the direct communication path and the establishment of the communication path via a macro and the establishment is permitted by the MME 40, and may establish the wireless communication path including the allocation of the radio resource between the eNB 45 and the UE 10 based on the detected information.

When the eNB 45 detects that only the establishment of the direct communication path is permitted based on the information indicating whether or not the establishment of the direct communication path is permitted and the information indicating whether or not the establishment of the communication path via a macro is permitted, the UE 10 may not allocate the radio resource for performing the wireless communication with the eNB 45. In this detection, the eNB 45 may perform the detection without including the ProSe Indicator in the notification.

Subsequently, the eNB 45 transmits a radio bearer establishment request to the UE 10, and notifies of the permission information based on the connection establishment request transmitted from the UE 10 (S1810). The notification may be transmitted by including information indicating whether or not the establishment of the direct communication path is permitted and the information indicating whether or not the establishment of the communication path via a macro is permitted, which are received from the MME 40.

Although it has been described that the discovery of the communication target UE is started before the service request is transmitted (S1703a), the discovery may be started after the radio bearer establishment request is received (S1803b).

The UE 10 receives a wireless bearer establishment request, and detects that the establishment of the direct communication path and the communication path via a macro is permitted, only the establishment of the direct communication path is permitted, or only the establishment of the communication path via a macro is permitted, based on the information indicating whether or not the establishment of the direct communication path is permitted and the information indicating whether or not the establishment of the communication path via a macro, which are included in the notification and are received from the MME 40. Here, as the method of detecting that the establishment of the communication path based on the LTE(D) and the communication path via a macro is permitted, the detection may be performed by detecting that the ProSe Indicator is included.

The MME 40 may add the information used by the UE 10 in order to establish the direct communication path, such as the bearer ID or the IP address used by the UE 10 in order to perform the communication using the direct communication path, or the information regarding the frequency used for the direct communication, to the context configuration request and the radio bearer establishment request, and may notify the UE 10 of the context configuration request and the radio bearer establishment request. The bearer ID correlated with the direct communication path may be allocated by the eNB 45, and may be notified to the UE 10 by being included in the radio bearer establishment request.

The MME 40 may add the information used by the UE 10 in order to establish the communication path via a macro, such as the bearer ID or the IP address used by the UE 10 in order to perform the communication using the communication path via a macro or the information regarding the frequency used for the communication via a macro, to the context configuration request and the radio bearer establishment request, and may notify the UE 10 of the context configuration request and the radio bearer establishment request. The bearer ID correlated with the communication path via a macro may be allocated by the eNB 45, and may be notified to the UE 10 by being included in the radio bearer establishment request.

When the establishment of the communication path is permitted by the MME 40 based on the information indicating whether or not the establishment of the direct communication path is permitted, the UE 10 may establish the direct communication path with the UE 10a (S1812). When the establishment of the communication path is not permitted, the establishment of the direct communication path may not be performed. The UE 10 may determine whether or not to establish the direct communication path based on the communication path correlated with the APP and the direct communication path permitted by the MME 40. Alternatively, the UE 10 may determine whether or not to establish the direct communication path based on any one of the information regarding the communication path correlated with the APP, and the direct communication path permitted by the MME 40.

For example, when the direct communication path correlated with the APP 4 is the LTE(D) and the communication via a macro and the APN permitted by the MME permits the establishment of both the LTE(D) and the WLAN(D) and the communication path via a macro, since the LTE(D) is the correlated with the APP 4 and the LTE(D) and the communication via a macro are permitted by the APN, the UE 10 determines to establish the direct communication path of the LTE(D) and the communication path via a macro.

In the establishment procedure of the direct communication path based on the LTE(D) with the UE 10a, the UE 10 may establish the communication path by using the frequency obtained from the radio bearer establishment request, or may establish the communication path by previously allocating a frequency to be used.

Here, the bearer ID or the IP address obtained from the radio bearer establishment request may be notified to the UE 10a, may be managed in correlation with the direct communication path, and may be used at the time of performing the direct communication. At the time of establishing the direct communication path with the UE 10a, any one of the UE 10 and the UE 10a may allocate the IP address or the bearer ID and may notify the other one of the IP address or bearer ID, and the other one may obtain the notified IP address or bearer ID, may manage the obtained IP address or bearer ID in correlation with the direct communication path, and may use the IP address or bearer ID at the time of performing the direct communication.

As mentioned above, the UE 10 and the UE 10a can start the communication by establishing the direct communication path. Ehen the communication path based on the LTE(D) is established for the communication of the APP 4, the UE 10 selects the direct communication path in order to transmit communication data of the APP 4, and transmits the communication data of the APP 4. More specifically, at the time of transmitting user data of the APN 4, the correlated IP address may be selected, and the communication may be performed. The correlated bearer ID may be selected, the communication path may be specified, and the communication may be performed.

The UE 10 that completes the establishment of the communication path of the LTE(D) with the UE 10a may transmit a context initialization completion notification to the MME 40 for notifying that the establishment of the direct communication path is completed (S1814).

Thereafter, the UE 10 may establish the communication path using the frequency obtained from the radio bearer establishment request, as the establishment procedure of the communication path via a macro of the UE 10, or may establish the communication path by previously allocating a frequency to be used.

The UE 10 may transmit the context initialization completion notification to the MME 40 by including information indicating whether or not the establishment of the direct communication path is completed and information indicating whether or not the establishment of the communication path via a macro is completed.

The MME 40 may determine whether or not to update the bearer information based on the information indicating whether or not the establishment of the direct communication path is completed, the information indicating whether or not the establishment of the communication path via a macro is completed, or both the information items.

For example, when it is determined that the establishment of the communication path via a macro is completed, after the context initialization completion notification is received, the MME 40 performs the procedure between the SGW 35 and the PGW 30, and updates the bearer configuration. Specifically, the MME 40 transmits a bearer update request to the SGW 35 (S1816), and the SGW 35 transmits the bearer update request to the PGW 30 based on the reception (S1818). The PGW 30 transmits a bearer update response to the SGW 35 (S1820), as a response, and the SGW 35 transmits the bearer update response to the MME 40 based on the reception (S1822). Through the above procedure, the bearer information is updated in each device.

Here, as in the APN 1 to the APN 3, in the case of the APN which permits only the direct communication path, the procedure from S1816 to S1822 is not performed.

Through the above procedure, the UE 10 can establish the communication path via a macro and the direct communication path of the LTE(D). Here, the UE 10 notifies the service request including the APN 4 which permits the communication path via a macro and the LTE(D), and thus, the UE 10 can establish the communication path via a macro and the LTE(D).

The UE 10 notifies the service request including the APN 5 which permits the communication path via a macro and the WLAN(D), and thus, the UE 10 can establish the communication path via a macro and the WLAN(D).

The UE 10 notifies the service request including the APN 6 which permits the communication path via a macro and the WLAN(D) and the LTE(D), and thus, the UE 10 can establish the communication path via a macro and the LTE(D) and the WLAN(D).

Here, when the communication paths of the LTE(D) and the WLAN(D) can be established as in the APN 6, the UE 10 may arbitrarily select the communication paths of the LTE(D) and the WLAN(D). The UE 10 may select the communication paths of the LTE(D) and the WLAN(D) based on the notification from the network.

Here, the UE 10 can transmit and receive data by using the direct communication path or the communication path via a macro with the UE 10a. Here, the UE 10 may select any one of the direct communication path or the communication path via a macro with the UE 10a. The UE 10 may manage a priority in order to select the direct communication path or the communication path via a macro, and may select the direct communication path or the communication path via a macro based on the priority.

For example, When the direct communication path of the LTE(D) and the communication path via a macro can be used as in the APP 4, the UE 10 may manage the priority of the direct communication path of the LTE(D) and the communication path via a macro. Here, the priority of the direct communication path of the LTE(D) and the communication path via a macro may be managed in correlated with the PDN connection of the direct communication path of the LTE(D) and the PDN connection of the communication path via a macro. The priority of the direct communication path of the LTE(D) and the communication path via a macro may be managed in correlation with the bearer of the direct communication path of the LTE(D) and the bearer of the communication path via a macro.

When the direct communication path of the WLAN(D) and the communication path via a macro can be used as in the APP 5, the priority of the direct communication path of the WLAN(D) and the communication path via a macro may be managed. Here, the priority of the direct communication path of the WLAN(D) and the communication path via a macro may be managed in correlation with the PDN connection of the direct communication path of the WLAN(D) and the PDN connection of the communication path via a macro. The priority of the direct communication path of the WLAN(D) and the communication path via a macro may be managed in correlation with the bearer of the direct communication path of the WLAN(D) and the bearer of the communication path via a macro.

When the direct communication paths of the LTE(D) and the WLAN(D) and the communication path via a macro can be used as in the APP 6, the priority of the direct communication paths of the LTE(D) and the WLAN(D) and the communication path via a macro may be managed. Here, the priority of the direct communication paths of the LTE(D) and the WLAN(D) and the communication path via a macro may be managed in correlation with the PDN connection of the direct communication path of the LTE(D), the PDN connection of the direct communication path of the WLAN(D), and the PDN connection of the communication path via a macro. The priority of the direct communication path of the LTE(D), the direct communication path of the WLAN(D) and the communication path via a macro may be managed in correlation with the bearer of the direct communication path of the LTE(D), the bearer of the direct communication path of the WLAN(D) and the bearer of the communication path via a macro.

Meanwhile, when it is not able to maintain the direct communication with the UE 10a, the UE 10 may start the communication via a macro.

That is, when the UE 10 is not able to start the direct communication of the LTE(D) with UE 10a, the UE 10 starts the communication via a macro (PGW 30) (S1826).

Here, when the bearer correlated with the communication path via a macro by the APN 4 and the bearer correlated with the communication path of the LTE(D) by the APN 4 are managed, since the UE 10 is not in proximity enough to perform the LTE(D) with the UE 10a, the UE 10 may select the bearer correlated with the direct communication path via a macro by the APN 4 and the UE 10a.

Through the above procedure, the UE 10 can start the direct communication of the LTE(D) and the communication via a macro with the UE 10a.

Although it has been described in the present example that the transmission of the service request by the UE 10 is performed when the UE 10 starts the direct communication with the UE 10a, the present invention is not limited thereto, but the service request may be previously transmitted. For example, the UE 10 may previously obtain permission based on the transmission of the service request for the establishment of the direct communication path of the LTE(D) and the communication path via a macro at the time of starting the terminal or at the time of starting the application, may determine that the UE 10 is proximity enough to perform the direct communication with the UE 10a, and may immediately establish the direct communication path when it is determined to start the direct communication (S1812).

Although it has been described in the above example that the communication is started by establishing the direct communication path based on the LTE(D) and the communication path via a macro in order to perform the communication of the APP 4, the UE 10 can apply the aforementioned method to the communication of the APP 5 and the communication of the APP 6, as shown in Fig. 4A.

For example, when the communication of the APP 4 is performed, the UE 10 requests the permission for the establishment of the communication path via a macro and the communication path of the LTE(D) by selecting the APN which permits the LTE(D) and the communication via a macro and adding the selected APN to the service request.

The UE 10 receives whether or not the establishment of the communication path of the LTE(D) and the communication path via a macro are permitted, and establishes the direct communication path of the LTE(D) and the communication path via a macro when the establishment is permitted.

When the establishment of the communication path based on the LTE(D) and the establishment of the communication path via a macro are permitted, the MME 40 may add information such as SSID for allowing the UE 10 and the UE 10a to perform the direct communication to the service request.

When the communication of the APP 5 is performed, the UE 10 requests the permission for the establishment of the communication path via a macro and the communication path of the WLAN(D) by selecting the APN which permits the WLAN(D) and the communication via a macro and adding the selected APN to the service request.

The UE 10 receives whether or not the establishment of the communication path of the WLAN(D) and the communication path via a macro are permitted, and establishes the direct communication path of the WLAN(D) and the communication path via a macro when the request is permitted.

When the establishment of the communication path based on the WLAN(D) and the communication path via a macro is permitted, the MME 40 may add information such as SSID for allowing the UE 10 and the UE 10a to perform the direct communication to the service request.

When the communication of the APP 6 is performed, the MME may transmit the service request by including the APN which permits the LTE(D), the WLAN(D) and the communication via a macro. After it is determined to use the LTE(D), the MME may transmit the service request by selecting the APN which permits the LTE(D) and the communication via a macro. After it is determined to use the WLAN(D), the MME may transmit the service request by selecting the APN which permits the WLAN(D) and the communication via a macro.

As stated above, the UE 10 performs the establishment procedure after the permission of the mobile communication provider is obtained for the establishment of the direct communication path correlated with the application. The request for the permission is performed based on the information correlated with the direct communication path.

Thus, for example, when there is a plurality of applications correlated with the LTE(D), the permission request may not be transmitted to each individual application.

For example, when the communication using the LTE(D) and the communication path via a macro is permitted at the time of starting the communication of the APP 4, if the communication using the LTE(D) and the communication path via a macro is performed by the application different from the APP 4, it is determined that the communication path establishment is already permitted, and the direct communication path and the communication path via a macro may be established.

In order to perform the communication through the APP 6, the UE 10 may transmit the service request including the APN which permits the LTE(D), the WLAN(D) and the communication via a macro, and may establish the communication channel with the UE by arbitrarily selecting the direct communication path of the LTE(D) or the direct communication path of the WLAN(D), or may establish the communication path via a macro when the establishment of the communication paths of both the LTE(D) and the WLAN(D) and the communication path in the communication via a macro is permitted. In the UE 10a as the communication partner, the permission procedure based on the service request described above in order to obtain the permission of the communication provider at the time of establishing the direct communication path and the communication path via a macro may be performed.

Alternatively, the permission procedure based on the service request may be performed when the establishment of the direct communication path is requested from the UE 10. That is, the completion of the permission procedure of the UE 10a as the communication partner at the time of establishing the direct communication path and the communication path via a macro between the UE 10 and the UE 10a may be one condition for establishing the direct communication path and the communication path via a macro.

When data of the application is transmitted and received, the UE 10 performs the communication by managing the direct communication path and the communication path via a macro correlated with the application and selecting the direct communication path or the communication path via a macro.

Here, the UE 10 may select the direct communication path of the LTE(D) in the state in which the direct communication path and the communication path via a macro are established using the APN such as the APN 4 which permits the establishment of the direct communication path of the LTE(D) and the communication path via a macro.

In this case, the UE 10 may transmit and receive data by managing the application and the communication path in correlation with each other, managing the priority of the direct communication path of the LTE(D) and the communication path via a macro correlated with the specified application, and selecting the communication path of the LTE(D) and the communication path via a macro correlated with the specified application.

Thus, the UE 10 can transmit and receive the data of the application using the direct communication path of the LTE(D) and the communication path via a macro by selecting the direct communication path or the communication path using the communication path via a macro.

The UE 10 may retain the bearer ID correlated with the established direct communication path and the bearer ID correlated with the established communication path with the PGW 30, may manage the communication path in correlation with the beater ID, and may manage the priority between the bearer ID correlated with the direct communication path and the bearer ID correlated with the communication path via a macro.

Thus, the UE 10 can transmit and receive the bearer ID by selecting the bearer ID correlated with the direct communication path or the bearer ID correlated with the communication path with the macro.

The UE 10 may establish the PDN connection for performing the communication by using the established direct communication path, may establish the PDN connection for the performing the communication by using the communication path via a macro, may manage the communication path and the PDN connection in correlation with each other, and may manage the priority between the PDN connection of the direct communication path and the PDN connection of the communication path via a macro.

Thus, the UE 10 can transmit and receive the data of the application that performs the direct communication and the communication via a macro by selecting the PDN connection of the direct communication path or the PDN connection correlate with the communication path via a macro.

Here, it is necessary to specify the application corresponding to the data to be transmitted and received when the data is transmitted and received, and specifying means may specify the application based on IP5 tuple information such as a transmission source address, a transmission destination address, a protocol number, a transmission source port number, and a transmission destination port number. The application may be specified based on the identification information such as an application ID. For example, when it is detected that the transmission data corresponds to the application such as APP 7 that performs the communication in the communication path via a macro, the transmission data is transmitted by selecting the communication path via a macro which is the communication path correlated with the application. When it is detected that the transmission data corresponds to the application such as the APP 1 capable of performing the communication using the LTE(D), the communication is performed by selecting the communication path based on the LTE(D) which is the communication path correlated with the application. When it is detected that the transmission data corresponds to the application such as the APP 4 capable of performing the communication using the communication path via a macro and the LTE(D), the communication is performed by selecting the LTE(D) or the communication path via a macro which is the communication path correlated with the application, but the communication is performed by selecting the communication path by the selection method based on the priority information described above.

### [1.3.5 Disconnection Procedure]

In this section, a method of stopping the transmission and reception of data to and from the UE 10a through the direct communication during the communication through the direct communication path between the UE 10 and the UE 10a will be described. As a case where the UE 10 ends the communication, a case where it is not necessary to use the established communication path such as the completion of the application by the user or a case where it is not able to maintain the direct communication path by moving the UE 10 or the UEa as the communication partner is considered.

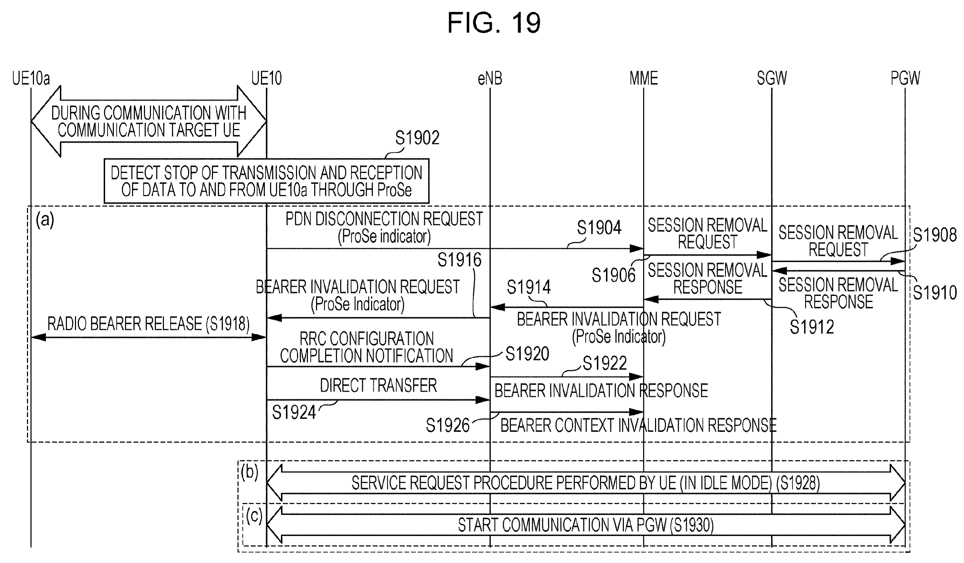

The method of stopping the transmission and reception of data to and from the UE 10a through the ProSe will be described in conjunction with these cases with reference to Fig. 19.

In the following description, the procedure of stopping the direct communication is started by detecting that the UE 10 stops the direct communication. Meanwhile, the UE 10a can perform the same procedure.

Initially, the UE 10 detects that the direct communication with the UE 10a is stopped (S1902). Here, as the method of detecting the stopping of the direct communication, various methods are considered. For example, the detection may be performed when the transmission and reception of data between the UE 10 and the UE 10a is completed or when the distance between the UE 10 and the UE 10a increases and it is not able to maintain the direct communication.

The subsequent procedure is differently performed in the case where the transmission and reception of data is completed between the UE 10 and the UE 10a and in the case where it is not able to maintain the direct communication between the UE 10 and the UE 10a and the communication is continued. When it is not able to maintain the direct communication between the UE 10 and the UE 10a, it is not previously detected that it is not able to maintain the direct communication, and the procedure is differently performed in the case where the connection standby state is changed and in the case where it is previously detected that it is not able to maintain the direct communication.

Hereinafter, a procedure performed when the transmission and reception of data is completed will be described as a disconnection procedure (a), a procedure performed when the connection standby state is changed while it is not previously detected that it is not able to maintain the direct communication will be described as a disconnection procedure (b), and a procedure performed when it is previously detected that it is not able to maintain the direct communication when it is not able to maintain the direct communication between the UE 10 and the UE 10a will be described as a disconnection procedure (c). The disconnection procedure (a) will be first described. Here, the description will be presented using (a) surrounded by a dotted line shown in Fig. 19.

### [1.3.5.1 Disconnection Procedure (a)]

The UE 10 that detects the completion of the transmission and reception of data to and from the UE 10a transmits a PDN disconnection request to the MME 40 (S1904). In this case, the UE 10 may notify the PDN disconnection request including ProSe Indicator.

The MME 40 performs a procedure of removing the session executed in the SGW 35 and the PGW 30 based on the APN. The MME detects that the PDN disconnection request is a request for releasing the direct communication path based on the ProSe Indicator, and removes the session executed in the SGW 35 and the PGW 30.

Here, the MME 40 may select whether or not to remove the session of the communication path via a macro of the UE 10, that is, the communication path of the PDN connection. That is, when the direct communication path of the LTE(D) and the communication path via a macro are established as in the APN 4, the MME removes the session within the core network, that is, removes the communication path of the PDN connection, and when only the direct communication path of the LTE(D) is established as in the APN 1, the MME does not remove the session of the communication path via a macro of the UE 10, that is, does not remove the communication path of the PDN connection. When the communication path establishment is not associated with the direct communication path and only the communication path via a macro is established as in the APN 7, the MME does not remove the session.

The MME 40 detects the communication path via a macro established together with the direct communication path such as the APN 4 in the UE 10. As the method of detecting that the communication path via a macro associated with the direct communication path is established, for example, the UE 10 notify the PDN disconnection request by explicitly including information regarding the PDN connection of the communication path via a macro, and the MME 40 may detect the information regarding the PDN connection of the communication path via a macro, and may remove the session of the PDN connection of the communication path via a macro.

The MME 40 can detect that only the direct communication path such as the APN 1 is established. That is, the UE 10 may notify the PDN disconnection request by explicitly information regarding the PDN connection of only the direct communication path, and the MME 40 may detect the information regarding the PDN connection of the direct communication path.

The MME 40 may detect that the only the communication path via a macro such as the APN 7 is established. That is, the UE 10 may notify the PDN disconnection request by explicitly including information regarding the PDN connection of only the communication path via a macro, and the MME 40 may detect the information regarding the PDN connection via a macro.

A session removal request (S1906) transmitted to the SGW 35 from the MME 40 that detects the establishment of the direct communication path and the communication path via a macro with the UE 10, a session removal request (S1908) transmitted from the SGW 35 to the PGW 30, a session removal response (S1910) transmitted from the PGW 30 to the SGW 35, and a session removal response (S1912) transmitted from the SGW 35 to the MME 40 as responses thereof are transmitted and received. Thus, in the PDN connection of the communication path via a macro associated with the direct communication path such as the APN 4, the session between the PGW 30 and the SGW 35 is removed, and the session between the SGW 35 and the eNB 45 is removed.

The session between the PGW 30 and the SGW 35 in the PDN connection of only the communication path via a macro such as the APN 7 may be removed, and the session between the SGW 35 and the eNB 45 may be removed.

When the communication path of only the direct communication path as in the APN 1 is removed, the processes from S1906 to S1912 may not be performed.

Thereafter, the MME 40 transmits a bearer invalidation request to the eNB 45 (S1914). In this case, a bearer ID indicating a bearer associated with the direct communication and the communication path via a macro may be included in the bearer invalidation request. A flag such as ProSe Indicator which explicitly indicates that the establishment of the direct communication path is permitted may be included in the bearer invalidation request. Here, the ProSe Indicator may be information indicating that the establishment of the PDN connection between the UE and the PGW of the related art is permitted.

Here, the eNB 45 detects that the direct communication path and the communication path via a macro such as the APN 4 are established by using the ProSe Indicator and the bearer ID, and removes the wireless communication path including the release of the radio resource between the eNB 45 and the UE based on this detection. The direct communication path between the UE 10 and the UE 10a is removed based on the RRC connection reconfiguration notification notified to the UE 10 by the eNB 45.

The eNB 45 may detect that the communication path via a macro such as the APN 7 is established by using the ProSe Indicator and the bearer ID, and may remove the wireless communication path including the release of the radio resource between the eNB 45 and the UE based on this detection. The eNB 45 may detect that the direct communication path such as the APN 1 is established by using the ProSe Indicator and the bearer ID.

Subsequently, the eNB 45 transmits the RRC connection reconfiguration notification for the UE 10 to the UE 10 (S1916). In this case, when the direct communication path established by the APN 1 or the APN 4 is removed, a bearer ID indicating a bearer associated with the direct communication may be included in the RRC connection reconfiguration notification. A flag such as ProSe Indicator which explicitly indicates that the direct communication path is removed in addition to indicating that the establishment of the PDN connection is permitted between the UE and the PGW in the related art may be included in the RRC connection reconfiguration notification.

Subsequently, the UE 10 releases the radio bearer which is the direct communication path with the UE 10a (S1918). In this case, the UE 10 may select whether or not to release the radio bearer based on the flag which explicitly indicates that the direct communication path or the bearer ID associated with the direct communication. When only the communication path via a macro such as the APN 7 is removed, the present process may not be performed.

The UE 10 that releases the radio bearer with the UE 10a transmits the RRC connection reconfiguration completion notification to the eNB 45 (S1920). The eNB 45 transmits the bearer invalidation response (S1922). Thereafter, the UE 10 transmits the direct transfer message to the eNB 45 (S1924). The eNB 45 transmits an EPS bearer context invalidation response to the MME 40 based on the reception of the direct transfer message (S1926).

Whether or not to transmit the RRC connection reconfiguration completion notification by the UE 10 may be selected based on whether or not remove the direct communication path. Similarly, whether or not to transmit the direct transfer message by the UE 10 may be selected based on whether or not to remove the direct communication path. For example, the UE 10 may determine to transmit the direct transfer message when the PDN connection between the PGW and the UE is removed, and may determine not to transmit the direct transfer message when the direct communication path is removed.

That is, when the communication path via a macro is removed as well as removing the direct communication path such as the APN 4, the RRC connection reconfiguration completion notification may be transmitted. When only the direct communication path such as the APN 1 is removed, the RRC connection reconfiguration completion notification may not be transmitted. When only the communication path via a macro such as the APN 7 is removed, the RRC connection reconfiguration completion notification may be transmitted.

Through the above procedure, the UE 10 can stop the communication via a macro and the direct communication based on the LTE(D) with the UE 10a.

When both the direct communication path and the communication path via a macro are established, the UE 10 may designate any one of these paths, and may transmit the disconnection request.

In this case, the UE 10 may transmit the disconnection request including information for identifying the direct communication path such as identification information the PDN connection or the bearer ID correlated with the direct communication path, and may request the release of the communication path resource correlated with the direct communication path in the MME 40 and the eNB 45, and the MME 40 and the eNB 45 may release the communication path resource correlated with the direct communication path based on the request.

The UE 10 may transmit the disconnection request including information for identifying the communication path via a macro such as the identification information of the PDN connection or the bearer ID correlated with the communication path via a macro, and may request the release of the communication path resource correlated with the communication path via a macro in the MME 40, the PGW 30 and the eNB 45, and the MME 40, the PGW 30 and the eNB 45 may release the communication path resource correlated with the communication path via a macro based on the request.

The UE 10 may transmit the disconnection request including information for identifying the communication path via a macro such as the identification information of the PDN connection or the bearer ID correlated with the communication path via a macro such as the identification information of the PDN connection or the bearer ID correlated with the direct communication path, and may request the release of the communication path resource correlated with the direct communication path in the MME 40 and the PGW 30, and the release of the communication path resource correlated with the communication path via a macro in the MME 40, the PGW 30 and the eNB 45. The MME 40, the PGW 30 and the eNB 45 may release the communication path resource correlated with the communication path via a macro based on the request.

### [1.3.5.2 Disconnection Procedure (b)]

Meanwhile, when it is not able to maintain the direct communication, a process procedure for starting the communication via a macro will be described. When the UE 10 establishes the communication path via a macro and the direct communication path and it is not able to maintain the direct communication due to the movement of the UE 10 or the communication partner UE 10a, the UE 10 continues the communication by changing the communication path from the direct communication path to the communication path via a macro. However, when the communication path via a macro is changed to an idle mode, it is necessary to change the communication path to an active mode.

In such a state, the UE 10 detects that the communication path via a macro is changed to the idle mode, and starts the procedure for changing the communication path to the active mode based on this detection.

Specifically, the UE 10 performs a service request procedure, as shown in (b) of Fig. 19. Here, in the UE 10, the PDN disconnection procedure may not be performed without transmitting the PDN disconnection request described with reference to (a) of Fig. 19. The service request procedure may be performed based on the procedure described with reference to Fig. 18. Hereinafter, the service request procedure shown in (b) of Fig. 19 will be described with reference to Fig. 18. Initially, the UE 10 starts the service request procedure (S1928). The service request procedure will be described with reference to Fig. 18. In Fig. 18, the direct communication path is not established, and only the communication path via a macro (via the PGW 30) is established. Thus, it is not necessary to discover the communication target UE in Fig. 18 (S1803a, S1803b). Since the communication is performed via the PGW, the UE 10 establishes the direct communication path with the UE 10a (S1812).

In the procedure described herein, the service request may be transmitted in order to change the UE 10 and the UE 10a from the connection standby state (idle) to the connected state.

Initially, the UE 10 transmits the service request in order to establish the communication via a macro (S1804). The UE 10 retains the APN correlated with the communication path via a macro, and selects the APN correlated with the communication path via a macro and the LTE(D) in, for example, the APN 4.

Here, for example, the APN such as the APN 5 which permits the WLAN(D) and the communication via a macro or the APN such as the APN 6 which permits the LTE(D), the WLAN(D) and the communication via a macro may be used.

The APN such as the APN 7 which establishes only the communication path via a macro and does not related with the direct communication path may be used.

In order to request that the MME 40 is to permit the establishment of the communication path via a macro, the UE 10 selects the APN which permits the LTE(D) and the communication via a macro, and adds the selected APN to the service request. Although it has been described in the aforementioned example that the UE 10 may select the APN 4, the APN 6 or the APN 7, the UE 10 may select the APN based on the correlation information by managing the application in correlation with the APN, for example, by using the APN 4 for the APP 4. Alternatively the APN may be arbitrarily selected.

The eNB 45 receives the service request from the UE 10, and transmits the service request including the APN to the MME 40 (S1806). Accordingly, the UE 10 transmits the service request to the MME 40 through the eNB 45.

Subsequently, the MME 40 receives the service request transmitted from the eNB 45, and checks the include APN. The checking of the APN is performed by determining that the APN received based on the permission information 442 for the communication path establishment is the APN which permits the LTE(D) and the communication via a macro. Thus, the MME 40 detects that the UE 10 requests the permission for the establishment of the direct communication path based on the LTE(D) and the establishment of the communication path via a macro. Since the process in the present example is the same as the method described in Communication Path Establishment Procedure 2 of 1.3.5.2, and the detailed description thereof will be omitted.

Through the above procedure, the MME 40 can determine to permit the establishment of the direct communication path based on the LTE(D) and the establishment of the communication path via a macro of the UE 10.

Here, the APN 7 may be detected, and it may be detected that the permission for the establishment of only the communication path via a macro is requested.

When the MME 40 determines to permit, the MME 40 transmits the context configuration request to the eNB 45 (S1808), and the eNB 45 transmits the radio bearer establishment request to the UE 10 based on the context configuration request (S1810). Thus, the MME 40 notifies the UE 10 that it is determined to permit the establishment of the direct communication path based on the LTE(D) and the establishment of the communication path via a macro.

Here, a flag such as ProSe Indicator which explicitly indicates that the establishment of the direct communication path is permitted may be included in the context configuration request and the radio bearer establishment request. Here, the ProSe Indicator may be information indicating that the establishment of the PDN connection between the PGW and the UE of the related art is permitted.

The eNB 45 may detect that the establishment requested from the UE 10 is the direct communication path between the UEs by the included ProSe Indicator, and may allocate the radio resource based on this detection. The eNB may detect that the establishment requested from the UE 10 is not the direct communication path between the UEs, and may establish the wireless communication path for transmitting and receiving data including the allocation of the radio resource between the eNB 45 and the UE 10 based on this detection.

Thereafter, the UE 10 receives the radio bearer establishment request from the eNB 45, and detects that the establishment of the communication path based on the LTE(D) is permitted. The detection may be performed by detecting that the ProSe Indicator is included in the notification.

The MME 40 may notify the UE 10 of the context configuration request and the radio bearer establishment require by including information regarding a bearer ID or an IP address used by the UE 10 in order to perform the communication using the direct communication path or a frequency used for the direct communication.

The MME 40 may notify the UE 10 of the context configuration request and the radio bearer establishment require by including information regarding a bearer ID or an IP address used by the UE 10 in order to perform the communication via a macro or a frequency used for the communication via a macro.

Here, even when the information regarding the direct communication path of the LTE(D) is received from the MME 40, since it is not able to establish the direct communication path with the UE 10a, the UE 10 may not establish the direct communication path (S1812).

Thereafter, the UE 10 establishes the communication path via a macro by using the bearer ID or the IP address used for the communication via a macro and the frequency used for the communication via a macro notified from the MME 40.

Subsequently, the UE 10 notifies the MME 40 that the UE 10 establishes the communication path via a macro by transmitting the context initialization completion notification (S1814). Here, the UE 10 may determine transmit the notification when the PDN connection between the PGW and the UE is established, but may determine not to transmit the notification when the direct communication path is established.

As the communication path via a macro, when the bearer between the PGW 30 and the UE 10 is established, the MME 40 perform the procedure between the SGW 35 and the PGW 30 after the context initialization completion notification is received, and updates the bearer configuration. Specifically, the MME 40 transmits the bearer update request to the SGW 35 (S1816), and the SGW 35 transmits the bearer update request to the PGW 30 (S1820). The PGW 30 transmits the bearer update response to the SGW 35, as a response (S1822) and the SGW 35 transmits the bearer update response to the MME 40 based on the reception (S1824). The bearer information is updated in each device through this procedure.

When the bearer between the PGW 30 and the UE 10 is established, the MME transmits the bearer update request. However, when the direct communication path is established,
the MME determines not to transmit the bearer update request, and the MME 40 does not transmit the bearer update request. As stated above, when the direct communication path is established, the MME 40, the SGW 35 and the PGW 30 may not perform the update process of the bearer information.

Subsequently, since it is not able to start the direct communication of the LTE(D) with the UE 10a, the UE 10 starts the communication via a macro (PGW 30) with the UE 10a (S1826).

### [1.3.5.3 Disconnection Procedure (c)]

Next, a case where it is previously detected that it is not able to maintain the direct communication when it is not able to maintain the direct communication between the UE 10 and the UE 10a will be described. In Disconnection Procedure (b) of 1.3.5.2, since the UE is in the connection standby (IDLE) state, the communication path via a macro is established. However, in Disconnection Procedure (c) of 1.3.5.3, the UE 10 maintains the connected state, and the direct communication path and the communication path via a macro are maintained. That is, the communication may be continued by changing the communication path without newly establishing the communication path via a macro based on the fact that the associated communication path via a macro and the direct communication path are maintained. Here, the description will be presented using (c) surrounded by a dotted line shown in Fig. 19. In (c) of Fig. 18, the UE 10 changes the communication path with the UE 10a from the direct communication path to the communication path via a macro, and thus, the UE 10 can start the communication via a macro (PGW 30) with the UE 10a (S1930). When the communication path is changed from the direct communication path to the communication path via a macro, and when the bearer ID associated with the communication path via a macro is managed, the UE 10 may select the bearer ID associated with the communication path via a macro. When the PDN connection associated with the communication path via a macro is managed, the PDN connection associated with the communication path via a macro may be selected.

Through the above procedure, the UE can stop the direct communication of the LTE(D) with the communication target UE during the communication, and can change the communication path to the communication via the PGW 30 when the transmission and reception of data is not completed.

As discussed above, in the present embodiment, when data is transmitted and received through the ProSe, the communication source UE can prevent the power consumption of the communication source UE from being inefficiently consumed by discovering the communication target UE without unnecessarily discovering the communication target UE.

It is possible to discover the communication target UE by giving the condition for discovering the communication target UE to the communication source UE, and it is possible to realize the start of the transmission and reception of data through the ProSe.

The mobile communication provider determines whether or not to permit the establishment of the direct communication path between the UEs, and thus, it is possible to provide the direct communication between the UEs to the UE.

The mobile communication provider can transmit and receive data on the direct communication path while the communication via the base station device provided in the related art. When the direct communication path and the communication path via the base station device of the related art can be used, it is possible to select any one of the direct communication path and the communication path via a macro.

### [1.4 Modification Example]

### [1.4.1 Modification Example 1]

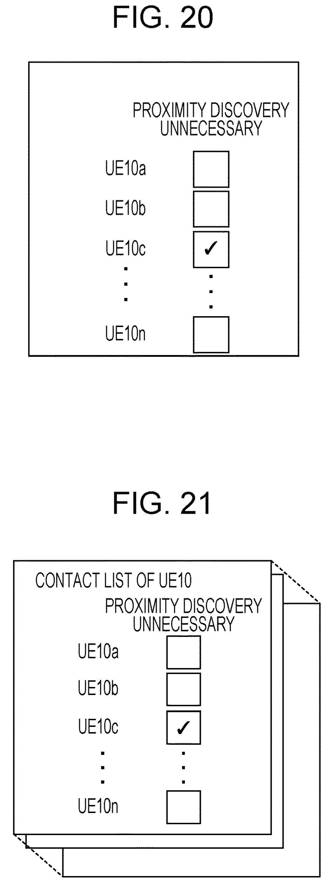

The UE according to the first embodiment manages the UE contact list 144 for each application, but may manage one UE contact list 144 for each UE without managing the UE contact list 144 for each application. Fig. 20 shows an example of the UE contact list 144 managed for each UE. As shown in Fig. 20, the UE 10 manages one UE contact list 144. Similarly to the first embodiment, the proximity discovery may not be performed using the proximity discovery unnecessary check box.

Since the UE 10 retains one UE contact list 144, the ProSe Server 90 manages the Server contact list 942 for each UE. Fig. 21 shows an example of the Server contact list 942 managed by the ProSe Server. As shown in Fig. 21, the ProSe Server 90 manages one Server contact list 942 for each UE.

The mobile communication system or the IP mobile communication network has the same configuration except for the above description. The UEs have the same configuration except for the UE contact list 144, and the ProSe Server 90 has the same configuration except for the Server contact list.

The UE positional information notification procedure, the proximity detection unnecessary notification procedure, the proximity detection procedure, the communication path establishment procedure, and the disconnection procedure can be similarly used, and thus, the description thereof will be omitted.

Thus, even when the UE 10 can use the plurality of applications, it is not necessary to have a different contact list for each application, and it is possible to share the same contact list by the plurality of applications.

### [1.4.2 Modification Example 2]

Although it has been described that the UE 10 according to the first embodiment facilitates (turns ON) both the function of the LTE(D) and the function of the WLAN(D), the UE 10 may consider the ON or OFF of the function of the LTE(D) or the ON or OFF of the function of the WLAN(D). The UE considers the ON or OFF of the function of the LTE(D) or the ON or OFF of the WLAN(D), and thus, the ProSe Server 90 can include the ON or OFF state of the LTE(D) or the ON or OFF state of the WLAN(D).

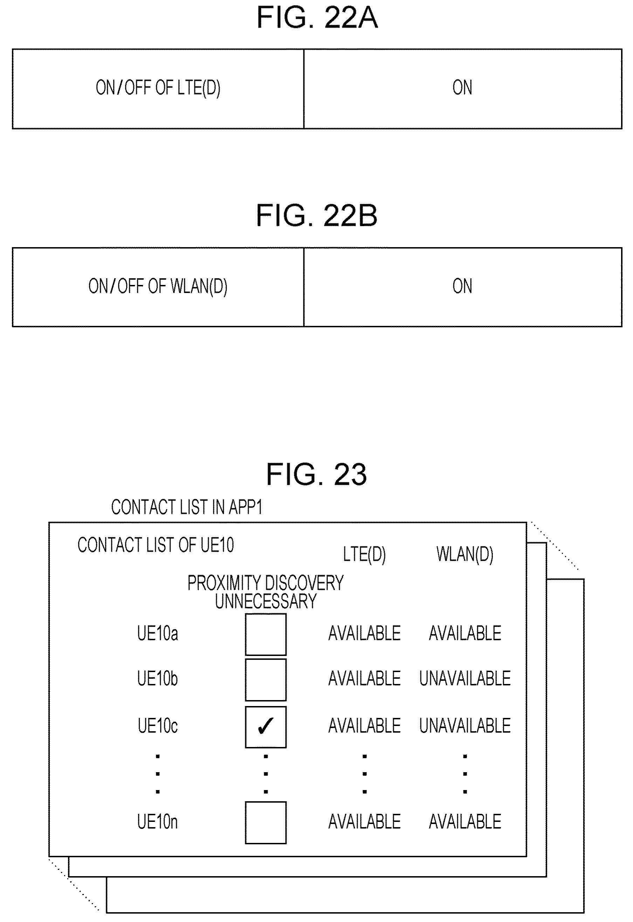

Fig. 22A shows an example of the ON or OFF of the LTE(D) in which the UE 10 manages the ON or OFF state of the LTE(D). In Figs. 22A and 22B, the ON or OFF state of the LTE(D) is turned on.

Fig. 22B shows an example of the ON or OFF of the WLAN(D) in which the UE 10 manages the ON or OFF state of the WLAN(D). In Figs. 22A and 22B, the ON or OFF state of the WLAN(D) is turned on.

Fig. 23 shows an example of the contact list of the Server contact list 942 in which the ON or OFF states of the LTE(D) and the WLAN(D) are managed in the ProSe Server 90. Since the LTE(D) and the WLAN(D) are turned on in the UE 10, the ON or OFF states of the LTE(D) and the WLAN(D) are managed in the UE contact list 144 of the UE 10. Here, if the state of the LTE(D) is turned off in the UE 10, the state of the LTE(D) of the contact list of the UE 10 within the Server contact list 942 may be turned off, or the state of the LTE(D) may not be managed. If the state of the WLAN(D) is turned off in the UE 10, the state of the WLAN(D) of the contact list of the UE 10 within the Server contact list 942 may be turned off, or the state of the WLAN(D) may not be managed. In the UE 10b, the state of the LTE(D) is turned on, the state of the WLAN(D) is turned off.

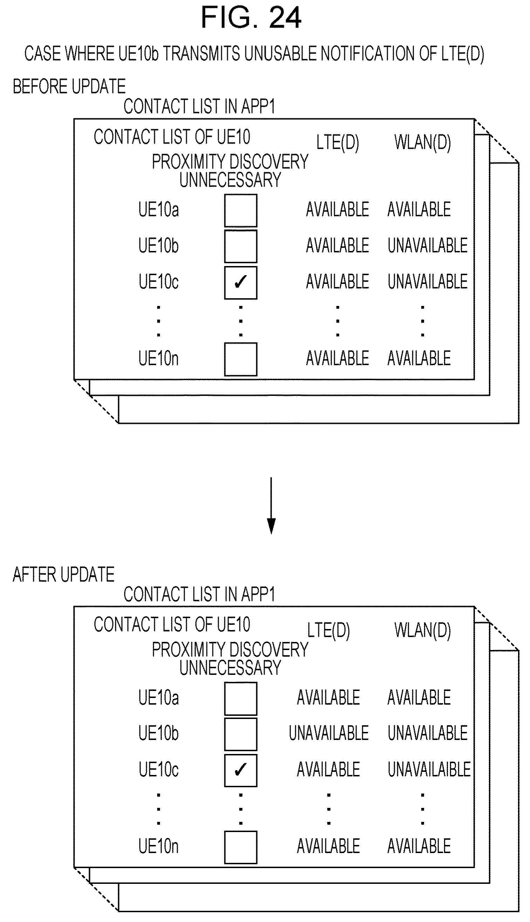

Fig. 24 shows an example in which the UE positional information of S1008 in "1.3.1 UE Positional Notification Procedure" is updated. Here, an updating example when UE 10b notifies the OFF state of the LTE(D) is illustrated. The LTE(D) of the UE 10b is changed from the ON state to the OFF state before the update and after the update. Here, the ON or OFF state of the LTE(D) is changed. However, when the ON or OFF state of the WLAN(D) is notified from the UE, the ON or OFF state of the WLAN(D) may be changed, and when the ON or OFF state of the LTE(D) and the ON or Off state of the WLAN(D) are notified, the ON or OFF state of the LTE(D) and the ON or OFF of the WLAN(D) may be changed.

Not the UE positional information of S1008 in "1.3.1 UE Positional Notification Procedure" but the ON or OFF state of the LTE(D) and/or WLAN(D) may be updated using the proximity discovery unnecessary notifying process of S1208 in "1.3.2 Proximity Discovery Unnecessary Procedure". The mobile communication system or the IP mobile communication network has the same configuration except for the above description. The UEs have the same configuration except for the ON or OFF state of the LTE(D) or the ON or OFF state of the WLAN(D), and the ProSe Server 90 has the same configuration except for the Server contact list.

The ProSe Server 90 detects the communication path that can be used at the time of detecting the proximity UE. However, when the state in which the UE invalidates the direct communication path establishment function such as the OFF state of the LTE(D) or the OFF state of the WLAN(D) is received and managed, the ProSe Server determines that these communication paths are not available.

The details of another UE positional information notification procedure, proximity detection unnecessary notification procedure, proximity detection procedure, communication path establishment procedure, and disconnection procedure are similarly applicable, and thus, the description thereof will be omitted.

### [1.4.3 Modification Example 3]

In the first embodiment, the ProSe Server 90 notifies of the proximity detection response indicating that the LTE(D) and the WLAN(D) can be used, in the notification of the contact list of S1412. However, the ProSe Server 90 may notify the UE 10 of the proximity degree, and the UE 10 may determine to perform the direct communication depending on the proximity degree. The present modification example has a difference from the positional relationship between the UEs is expressed in numerical form and is notified and the granularity of the positional information can be minutely notified.

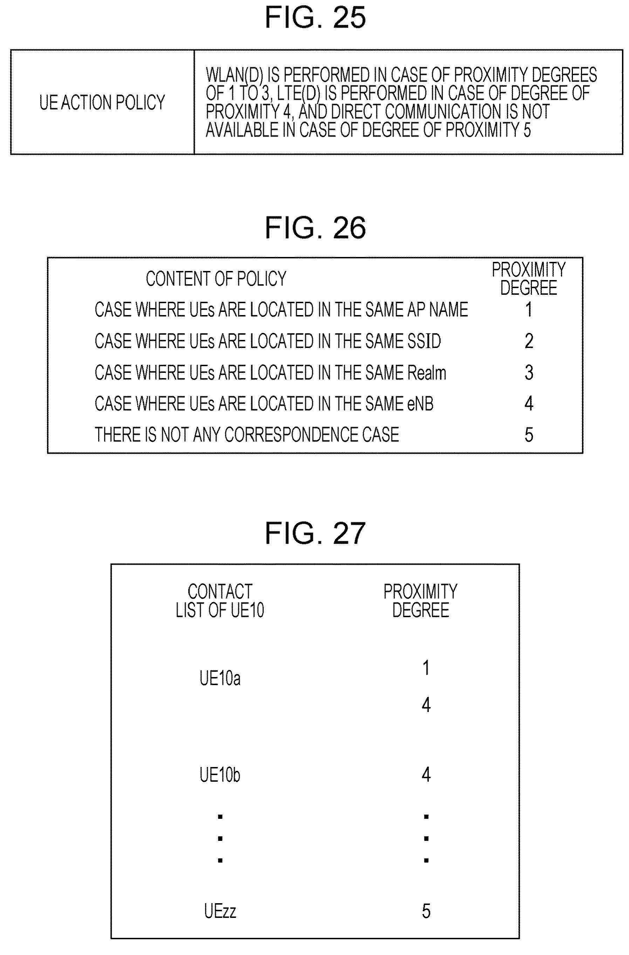

Fig. 25 shows an example of a UE action policy managed by the UE 10. As shown in Fig. 25, the WLAN(D) is performed in a case where the proximity degrees are 1 to 3, the LTE(D) is performed in a case where the proximity degree is 4, and it is not able to perform the direct communication in a case where the proximity degree is 5. Only one proximity degree is not notified, and multiple proximity degrees are likely to be notified. When the proximity degree of 1 and the proximity degree of 4 are notified, there is a possibility that the WLAN(D) and the LTE(D) are arbitrarily selected.

Fig. 26 shows an example of the proximity evaluation policy 948 managed by the ProSe Server 90. The ProSe Server 90 evaluates the UE within the Server contact list 942 based on the positional information management table 946. In Fig. 26, if the same AP name is managed in the positional relationship between the UEs, it is evaluated as being the proximity degree of 1, if the same SSID is managed, it is evaluated as being the proximity degree of 2, if the same Realm is managed, it is evaluated as being the proximity degree of 3, if the same eNB ID is managed, it is evaluated as being the proximity degree of 4, and when there is not any correspondence case, it is evaluated as being the proximity degree of 5.

Fig. 27 shows an example of the proximity evaluation result of S1410 in "1.3.3 Proximity Detection Procedure". Since the UE 10 are the UE 10a are managed to be connected to the same AP and are managed to be connected to the same eNB, the UE 10a is evaluated as the proximity degree of 1 and the proximity degree of 4. Since the UE 10 and the UE 10b are managed to be connected to the same eNB, the UE 10b is evaluated as the proximity degree of 4. Since the positional information corresponding to the proximity evaluation policy 948 is not managed, the UEzz is evaluated as the proximity degree of 5.

The mobile communication system or the IP mobile communication network has the same configuration except for the above description. The UE has the same configuration except for the UE action policy, and the ProSe Server 90 has the same configuration except for the proximity evaluation policy 948.

The UE positional information notification procedure, the proximity detection unnecessary notification procedure, the proximity detection procedure, the communication path establishment procedure, and the disconnection procedure can be similarly used, and thus, the description thereof will be omitted.

### [1.4.4 Modification Example 4]

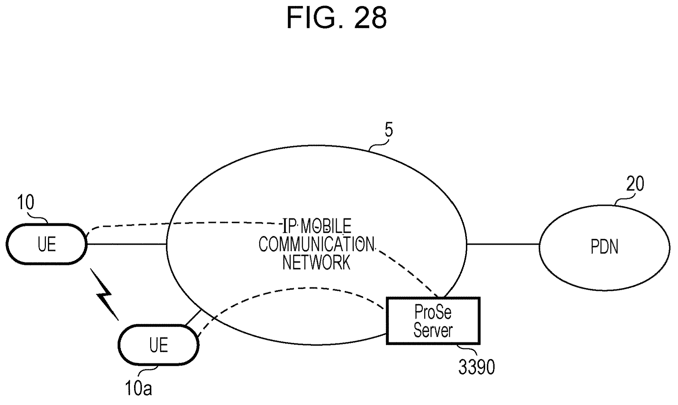

The mobile communication system may have the same configuration illustrated in Fig. 28 not the configuration illustrated in Fig. 1. It has been described in Fig. 1 that the ProSe Server 90 is provided on the PDN 20, but may be provided on the IP mobile communication network 5 as shown by a ProSe Server 3390 in Fig. 28. The ProSe Server 3390 can perform the communication by ensuring a secure communication path with the UE 10 and UE 10a. The ProSe Server 3390 can perform the communication by ensuring a secure communication path with the MME 40.

The mobile communication system or the IP mobile communication network has the same configuration except for the above description.

The UE positional information notification procedure, the proximity detection unnecessary notification procedure, the proximity detection procedure, the communication path establishment procedure, and the disconnection procedure can be similarly used, and thus, the description thereof will be omitted.

### [1.4.5 Modification Example 5]

Although it has been described in the first embodiment that when the UE 10 requests the permission for the establishment of the direct communication path from the mobile communication provider, the UE 10 transmits the request including the APN and the mobile communication provider determines whether or not to permit the request based on the APN, determination means is not limited thereto, but another method may be used.

For example, the MME 40 may manage an application list equivalent to the APP list 142 retained by the UE 10, may manage the application and the direct communication path capable of being established in correlation with each other, and may determine whether or not to permit the request based on the managed application and direct communication path.

In this case, the UE 10 may transmit the PDN connectivity request (S1704) or the service request (S1804) including the information regarding the application.

When the PDN connectivity request or the service request is received, the MME 40 may determine whether or not to permit the included application and the information of the direct communication path correlated with the application. Thus, the MME 40 can notify the UE 10 of whether or not to select the usable direct communication path and permit the establishment of the direct communication path for each application of the UE 10.

The configuration of each device and the procedure except for the above description are the same as those described in the first embodiment, and the detailed description thereof will be omitted.

As discussed above, although the first embodiment and the plurality of modification examples thereof have been described, the respective modification examples may be independently applied to the first embodiment, but may be applied by combining two or more modification examples.

### [1.4.6 Modification Example 6]

Although the embodiments of the present invention have been described with reference to the drawings, a specific configuration is not limited to the embodiments. Designs within the scope without departing from the gist of the present invention are included in the claims.

In the respective embodiments, programs operated in the respective devices are programs (programs causing a computer to perform functions) that control a CPU and the like so as to realize the functions of the embodiments. The information used in these devices is temporarily accumulated in a temporary storage device (for example, RAM) during the process, and is then stored in a storage device such as various ROMs or HDDs. The stored information is read by the CPU when necessary, and is modified and written.

As a recording medium that stores the programs, any one of a semiconductor medium (for example, ROM, or non-volatile memory card), an optical recording medium and a magnetooptical recording medium (for example, DVD (Digital Versatile Disc), MO (Magneto Optical Disc), MD (Mini Disc), CD (Compact Disc), or BD), or a magnetic recording medium (for example, magnetic tape, or flexible disc) may be used. The functions of the present invention may be realized by performing the process in cooperation with other application programs or an operating system based on the instruction of the program, in addition to realizing the functions of the embodiments by executing the loaded program.

When the programs are distributed on the market, the programs may be distributed by being stored in a portable recording medium, or may be transmitted to a server computer connected via a network such as the Internet. In this case, a storage device of a server computer may be included in the present invention.

In the embodiments, some or all of the respective devices may be realized using LSI (Large Scale Integration) which is an integrated circuit. The respective functional blocks of the respective devices may be realized as individual chips, or some or all thereof may be realized as an integral chip. The integrated circuit is not limited to the LSI, but may be realized as a private circuit a general-purpose processor. As the semiconductor technology has progressed, when a technology for realizing the integrated circuit replaced with the LSI has appeared, it is possible to use integrated circuit realized by this technology.

Although it has been described in the embodiments that the LTE and the WLAN (for example, IEEE 802.11a/b/n) are used as the example of the wireless access network, the connection may be performed through the WiMAX in place of the WLAN.

### Industrial Applicability

An embodiment of the present invention is applicable to a mobile communication system capable of suppressing unnecessary proximity discovery when a UE as a communication target is discovered in order to allow a UE that performs the transmission and reception of data in a proximity service to start the proximity service.

### Reference Signs List

- 1: Mobile communication system
- 5: IP mobile communication network
- 10: UE
- 20: PDN
- 30: PGW
- 35: SGW
- 40: MME
- 45: eNB
- 50: HSS
- 55: AAA
- 60: PCRF
- 65: ePDG
- 70: WLAN ANa
- 72: WLAN APa
- 74: GW
- 75: WLAN ANb
- 76: WLAN APb
- 80: LTE AN
- 90: ProSe Server

## Claims

1. A terminal device of a mobile communication system that includes a server device which detects a proximity terminal, a control device, a terminal device, and a proximity terminal device which is positioned in the proximity of the terminal device, the terminal device being adapted to:
obtain information regarding a proximity terminal device positioned at a distance capable of performing the establishment of a direct communication path correlated with an application, and information regarding a direct communication path capable of being established, from the server device;
transmit a request message which requests an approval for the establishment of a communication path via a macro and the direct communication path capable of being established to the control device;
receive a response message indicating that the establishment of the communication path via a macro and the direct communication path capable of being established is permitted; and
establish the direct communication path with the proximity terminal device based on the response message, or establish the communication path via a macro with the terminal device.

2. The terminal device according to claim 1,
wherein the terminal device is adapted to:
retain a first APN which permits the establishment of the direct communication path and the communication path via a macro, and a second APN which does not permit the establishment of the direct communication path; and
transmit the request message which requests the approval for the establishment of the direct communication path capable of being established to the control device by including an APN which permits the establishment of the direct communication path and the communication path via a macro.

3. A terminal device that is adapted to:
transmit a request message which requests the establishment of a communication path by including an APN which does not permit the establishment of a direct communication path and a communication path via a macro to a control station;
receive a response message indicating that the establishment of the communication path is permitted and the permitted communication path is established, from a control device;
establish the communication path based on the response message;
manage an application and a communication path in correlation with each other; and
select the direct communication path or the communication path to transmit application data using the selected communication path based on the correlation of the application with the communication path.

4. A control device of a mobile communication system that includes a server device which detects a proximity terminal, the control device, a terminal device, and a proximity terminal device which is positioned in the proximity of the terminal device, the control device being adapted to:
manage identification information of the terminal device and permission information indicating that the establishment of a direct communication path and a communication path via a macro is permitted in correlation with each other;
receive a request message which requests an approval for the establishment of the direct communication path and the communication path via a macro transmitted from the terminal device; and
permit the establishment of the direct communication path and the communication path via a macro of the terminal device based on the correlation of the identification information of the terminal device with the permission information for the establishment of the direct communication path and the communication path via a macro.

5. A base station device of a mobile communication system that includes a server device which detects a proximity terminal, a control device, a terminal device, and the base station device, the base station device being adapted to:
receive a notification including information indicating whether or not the establishment of a direct communication path of the terminal device and a communication path via a macro is permitted, from the control device; and
allocate a radio resource for transmitting and receiving data to and from the terminal device based on the permission information included in the notification.
